# EUROPEAN PATENT APPLICATION

(11) **EP 1 043 856 A2**
(43) Date of publication of application: **11.10.2000**
(21) Application number: 00102394.4
(22) Date of filing: 03.02.2000
(51) Int. Cl.: H04J 3/16, H04J 3/06

(54) **Method and apparatus for implementing a wavelength division multiplexing communication system**

(30) Priority: 05.04.1999 US 127843 P; 21.10.1999 US 422194
(71) Applicant: Hitachi, Ltd., Chiyoda-ku, Tokyo 101-8010 (JP)
(72) Inventor: Nakano, Yukio, Alpharetta, Georgia 30005 (US); Wright, Michael, Dallas, Texas 75204 (US); Stalick, Victor, Celina, Texas 75009 (US); Bootman, Steven, Garland, Texas 75044 (US)
(74) Representative: Strehl Schübel-Hopf & Partner

(57) **Abstract**

The present invention is directed to a method and apparatus for allowing the inclusion of additional overhead information in a digital signal without requiring that the transmission rate be increased in order to compensate for the additional data. As optical transmission rates increase and new multiplexing techniques such as wavelength division multiplexing are introduced, additional overhead information for error correction and signal degradation detection is necessary. The digital signals in optical form are sent over transmission lines and include synchronisation bits in order to identify the beginning of the signal so that data can be extracted in a predetermined order. In one embodiment of the invention, a digital transmission frame converting apparatus includes a digital signal receiver for receiving a first digital signal that included frame synchronisation bits. A frame synchronisation module then determines the beginning of the message from the synchronisation bits. A mapping module then maps the first signal into a second signal format with the same size frame and includes additional over head data necessary for detecting errors that may occur during the transmission of the signal. The additional overhead information is substituted for a large portion of the original synchronisation bits.

## Description

### FIELD OF THE INVENTION

The present invention relates to communication systems, and more particularly, to methods and apparatus for implementing communication systems which use wavelength division multiplexing.

### BACKGROUND

The deployment of multi-wavelength optical Line Amplifiers (LAs) and Dense Wavelength Division Multiplexers (DWDMs) has been a key means of network service providers to contend with the rapid capacity expansion demanded by the new era of data communications spurred by widespread use of the Internet. While the devices are being used, the adoption and standardisation of interfaces and equipment functions in a network in which multiple wavelengths are transported over the same fibre and amplified, multiplexed, and demultiplexed is at a comparatively early stage.

One key area with a need to be addressed and standardised is the layers of overhead to be used between DWDMs and LAs and other network elements for functions such as maintenance signalling, user channels and message-based communications. The Telecommunication Standardisation Sector of the International Telecommunication Union ("ITU-T") has in "Architecture of Optical Transport Networks Recommendation G.872" termed this new optical-domain, multi-wavelength network the Optical Transport Network (OTN) and have established the three layers of an OTN, i.e.,
- (1): an Optical Multiplex Section (OMS) for overhead data concerning the transportation of the multi-wavelength signal from the wavelength multiplexer to a wavelength demultiplexer,
- (2): an Optical Transport Section (OTS) for overhead data concerning the transportation of the multi-wavelength signal from the multiplexer to a line amplifier or between line amplifiers, and
- (3): an Optical Channel (OCh) for overhead data concerning the transportation of a single wavelength signal from its entry into the network to its exit from the network.

The functions to be supported by the OCh overhead (OH) are also outlined in ITU-T G.872. Previous proposed implementation methods for the OCh overhead such as a subcarrier multiplexing approach and a "digital wrapper" approach have serious disadvantages.

In a previously proposed subcarrier multiplexing technique, each individual channel wavelength signal is modulated at a low frequency to transmit information along with the signal. At the receiving end, the low frequency signal is demultiplexed from the channel. The benefits of this approach are that the signal is channel-associated and that it is not necessary to convert the main signal to an electrical signal to access the subcarrier multiplexed overhead. The client signal is fully transparent. The disadvantage of subcarrier multiplexing another signal onto the main signal is a resulting signal to noise ratio penalty that increases with the overhead bit rate. For example, the allowable overhead bit rates when the subcarrier multiplexing method is used with an optical signal compliant with known interface specifications, OC-48 and OC-192 in one embodiment, were 25 kb/s and 100 kb/s, respectively. This is equivalent to only 3 bits per SONET 125 µs frame for OC-48 compliant signals and 12 bits for OC-192 compliant signals which is insufficient for the systems' typical needs.

Another proposed method is a digital wrapper approach. The digital wrapper approach allows for full transparency and channel association but with greater overhead capacity than the sub-carrier multiplexing technique. However, the digital wrapper approach adds 16 FEC check bytes and 1 overhead/framing byte for each 238 payload bytes. Therefore, the signal rate is increased by 15/14.

A main disadvantage of the digital wrapper approach is that it requires the use of a higher bit rate than is currently provided for in the OC-48 and OC-192 specifications. Thus, the digital wrapper approach would necessitate redesign or modification of the currently available OC-48 and OC-192 compliant transmitter and receiver modules. Another drawback to the digital wrapper approach is that it will likely necessitate the use of a phase locked loop (PLL) for rate conversion at transponders which also add the OCh overhead.

In view of the above discussion, there is a need for an improved method and apparatus for providing overhead layers to be used when communicating information, e.g., digital data, between DWDMs or other network elements. It is desirable that any new overhead layer method and apparatus be capable of being implemented at a reasonable cost and without requiring an increase in the overhead bit rate beyond what is already provided for in currently utilised optical carrier specifications, e.g., OC-48 and OC-192. It is also desirable that overhead layers be capable of providing some degree of error correction as well as messaging, signalling and other common administrative/control functionality.

### SUMMARY OF THE INVENTION

The present invention is directed to a method and apparatus for allowing the inclusion of additional overhead information in a digital signal without requiring that the transmission rate be increased in order to compensate for the additional data. As optical transmission lines are becoming more common, additional overhead information for error correction and signal degradation detection is necessary. The digital signals in optical form are sent over transmission lines and include synchronisation bits in order to identify the beginning of the signal so that data can be extracted in a predetermined order. In one embodiment of the invention, a digital transmission frame converting apparatus includes a digital signal receiver for receiving a first digital signal which includes frame synchronisation bits. A frame synchronisation module then determines the beginning of the message from the synchronisation bits. A mapping module then maps the first signal into a second signal format with the same size frame and includes additional overhead data necessary for detecting errors that may occur during the transmission of the signal. The additional overhead information fits into the same frame size because at least a portion of the original synchronisation bits are removed.

The present invention can be used for SONET (North American form) and SDH (International format) frame formats, for example. The converter can also perform a reverse conversion by receiving the modified digital signal, locating the new synchronisation bits, removing the additional overhead information, analysing the information as necessary, and inserting the original synchronisation bits to regenerate the original signal. The new overhead information can be used for monitoring purposes during the transmission of the digital signal and can be used in conjunction with individual wavelength multiplexed signals to increase the capacity of the transmission lines.

Additional features and embodiments of the present invention are described in the detailed description that follows. For example, a scrambler can be used to ensure a readable signal is produced. In addition, a stuffing module can be used to synchronise multiple signals being multiplexed onto one channel.

### BRIEF DESCRIPTION OF THE DRAWINGS

The objects, features and advantages of the present invention will become more apparent from the consideration of the following detailed description, taken in conjunction with the accompanying drawings, in which:
- FIG. 1: illustrates the OCh, OMS, and OTS layers of the Optical Transport Network (OTN);
- FIG. 2: illustrates a first digital transmission frame converting apparatus implemented in accordance with a first embodiment of the present invention;
- FIG. 3: illustrates the position of an A1 and an A2 framing pattern in a SONET or SDH frame;
- FIG. 4: illustrates a possible OCh frame structure that has six rows, 8 columns of overhead bytes and 8 columns of FEC bytes and can be used to map one OC-48 or STM-16 signal;
- FIG. 5: illustrates a second digital transmission frame converting apparatus implemented in accordance with the first embodiment of the present invention, which performs the inverse of the conversion process performed by the FIG. 2 apparatus;
- FIG. 6: illustrates exemplary OCh overhead inserter and the overhead that may be inserted during the conversion process performed by the FIG. 2 apparatus;
- FIG. 7: illustrates exemplary OCh overhead terminator and the overhead that could be terminated during the inverse conversion process implemented as part of the first exemplary embodiment;
- FIG. 8: is an apparatus implemented in accordance with a second embodiment of the present invention in which multiple tributaries are multiplexed and then converted, and, during an inverse conversion operation, are demultiplexed;
- FIG. 9: illustrates an apparatus implemented in accordance with a third embodiment of the present invention in which the generation and termination of SONET overhead occurs before the conversion operation and after the inverse conversion operation of the present invention;
- FIG. 10: illustrates a digital signal regenerating apparatus implemented in accordance with a fourth embodiment of the present invention;
- FIG. 11: illustrates exemplary OCh overhead monitor and inserter and the overhead that can be monitored, e.g., detected, and inserted during the regeneration process of the fourth embodiment of the present invention;
- FIG. 12: illustrates a possible OCh frame structure, suitable for use by the fifth embodiment of the present invention, in which payload and multiplex control bytes are shown at a point in the process prior to full OCh overhead insertion;
- FIG. 13: illustrates three levels of tributary signals as described in conjunction with the description of the fifth embodiment;
- FIG. 14: illustrates a digital signal transmission sequence relevant to the fifth embodiment of the present invention;
- FIG. 15: is a drawing indicating the number of stuffing bits for each SONET/SDH level, as used in the fifth embodiment of the present invention;
- FIG. 16: is a drawing of a possible format of two bytes used for indication of pointer adjustments, as referenced in the fifth embodiment of the present invention;
- FIG. 17: illustrates a format for bytes suitable for use in multiplexing signalling, performed in accordance with the fifth embodiment of the present invention;
- FIG. 18: is a drawing indicating a possible assignment of meaning to a port indicator, as referenced in the fifth embodiment of the present invention;
- FIG. 19: illustrates a portion of an apparatus implemented in accordance with a fifth embodiment of the present invention, in which multiple digital signals are multiplexed before conversion during which the framing pattern of each signal is removed;
- FIG. 20: illustrates a portion of an apparatus implemented in accordance with the fifth embodiment of the present invention, in which an inverse conversion operation is performed during which multiple signals are demultiplexed, and the de-multiplexed signals have their framing patterns restored;
- FIG. 21: illustrates a digital signal wavelength division multiplexing apparatus implemented in accordance with a sixth embodiment of the present invention;
- FIG. 22: illustrates a wavelength division multiplexing and digital signal regenerating apparatus implemented in accordance with a seventh embodiment of the present invention;
- FIG. 23: is a drawing of a digital signal wavelength division add-drop multiplexing apparatus implemented in accordance with an eighth embodiment of the present invention;
- FIG. 24: illustrates use of the six row OCh frame structure of FIG. 4, in a multi-frame configuration, to map an OC-192 or an STM-64 signal in one exemplary embodiment;
- FIG. 25: illustrates use of the six row OCh frame structure of FIG. 4, to map an OC-12 or an STM-4 signal;
- FIG. 26: illustrates use of the six row OCh frame structure of FIG. 15 to map an OC-3 or an STM-1 signal;
- FIG. 27: illustrates use of the six row OCh frame structure of FIG. 15, to map a signal other than SONET or SDH;
- FIG. 28: illustrates another possible six row OCh frame structure, the OCh frame structure including four rows of overhead bytes and twelve rows of FEC bytes;
- FIG. 29: illustrates a three row OCh frame structure with sixteen columns of overhead bytes and sixteen columns of FEC bytes;
- FIG. 30: illustrates a three row OCh frame structure including sixty-four columns of overhead bytes and up to 64 columns for FEC bytes;
- FIG. 31: illustrates a nine row OCh frame structure including eleven columns of overhead bytes and up to 32 columns for FEC bytes;
- FIG. 32: illustrates a twelve row OCh frame structure including sixteen columns of overhead bytes and sixteen columns for FEC bytes;
- FIG. 33: illustrates an OCh format in which three of the A1 bytes and three of the A2 bytes of an OC-12 or an STM-4 rate signal are left intact and the other A1 and A2 bytes replaced with OCh overhead and FEC bytes;
- FIG. 34: illustrates an OCh format in which three of the A1 bytes and three of the A2 bytes of an OC-48 or an STM-16 rate signal are left intact and the other A1 and A2 bytes are replaced with OCh overhead and FEC bytes;
- FIG. 35: illustrates an OCh format in which three of the A1 bytes and three of the A2 bytes of an OC-192 or an STM-64 rate signal are left intact and the other A1 and A2 bytes are replaced with OCh overhead and FEC bytes;
- FIG. 36: illustrates the basic frame format for an OCh frame signal;
- FIG. 37: illustrates a frame format of an STM-16 signal;
- FIG. 38: illustrates an OCh adaptation of an STM-16 signal;
- FIG. 39: illustrates an OCh adaptation of an STM-4 signal;
- FIG. 40: illustrates an OCh adaptation of an STM-64 signal; and
- FIG. 41: is an example of an assignment for the additional overhead bytes.

### DETAILED DESCRIPTION

This invention supports a channel-associated approach for OCh OH implementation that supports the transparent transport of client signals while providing the additional benefit of rate preservation in the case of Synchronous Digital Hierarchy ("SDH") client signals. The OCh OH method of the present invention is rate independent and can be applied to both SDH and non-SDH client signals. Different embodiments are described herein with respect to either the known SDH format (international form) or SONET format (North American form) as an exemplary format. Each embodiment is applicable to both formats or any other format with repeating fixed value patterns.

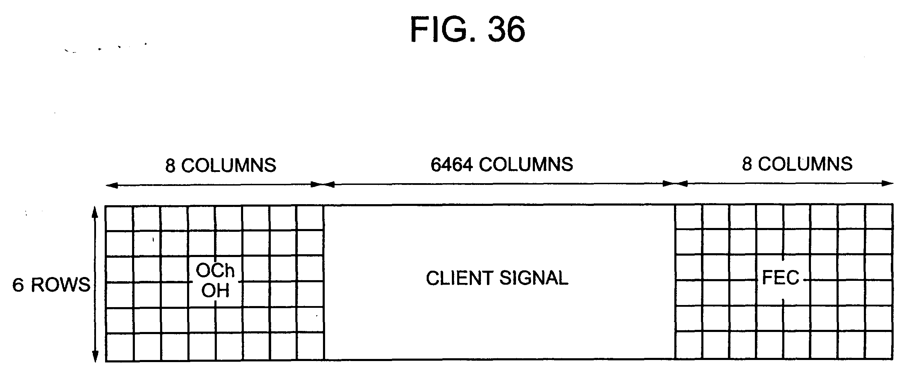

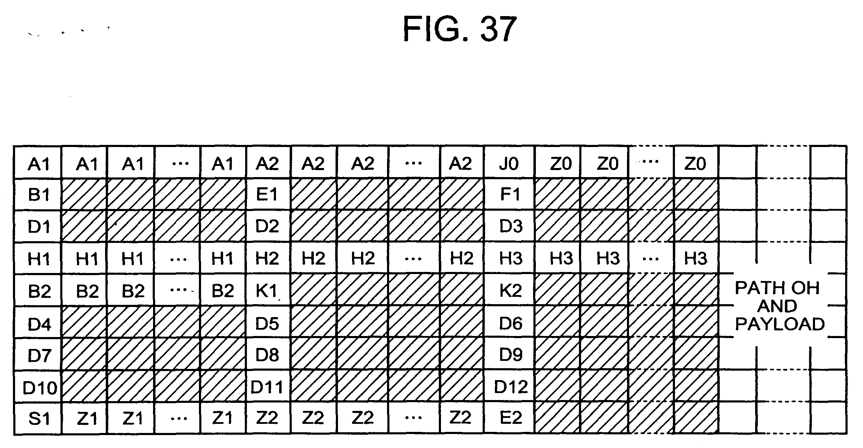

The basic frame format for an OCh signal frame is shown in FIG. 36. The OCh signal frame contains an OCh overhead portion, a client signal portion containing the message and an FEC portion which contains error correction codes. The basic frame format can be applied to any SDH rate from STM-1 to STM-256 (Synchronous Transport Module "STM") and above, as well as to any non-SDH digital signals. As the basic frame size corresponds with an STM-16 frame, the OCh adaptation of an STM-16 signal, shown in FIG. 37, will be discussed as an example. It will then be shown how this same format can be applied to other SDH rates as well as to non-SDH signals.

The total number of bytes in the OCh frame is equal to the total number of bytes in one STM-16 frame. The number of overhead bytes (OCh OH and FEC) in the frame is equal to the number of A1 and A2 bytes in an STM-16 frame. A1 and A2 bytes are synchronisation data that allows a receiver to identify the start of the frame. The bytes are repeated so that they can be distinctly identified from other data. The number of times the A1 and A2 bytes are represented are directly related to the size of the frame. In an STM-16, there are 16 A1 and A2 bytes.

Because the size of the additional overhead is equal to the size of the A1 and A2 bytes, it is possible to transparently transport all of the bytes in an STM-16 excluding the A1 and A2 bytes as client signal bytes, without changing the total number of bytes per frame and thus preserving the STM-16 transmission rate. At the OCh trail termination point, the OCh OH is removed and the client signal bytes written back into an STM-16 format with A1 and A2 bytes inserted. Since the value of the A1 and A2 bytes are fixed, it is not necessary to transparently transport them in order to reinsert them at the OCh trail termination point. Also note that B1 parity integrity is preserved since the A1 and A2 bytes are reinserted.

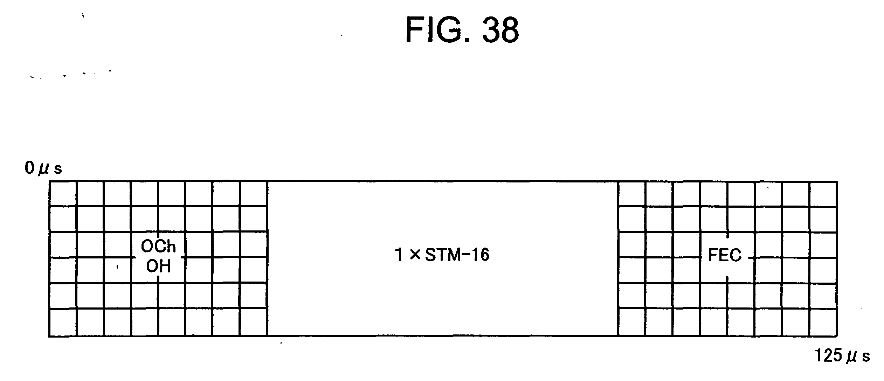

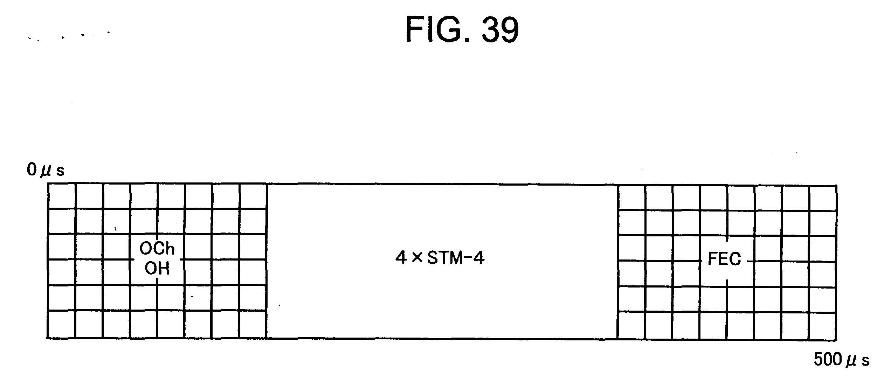

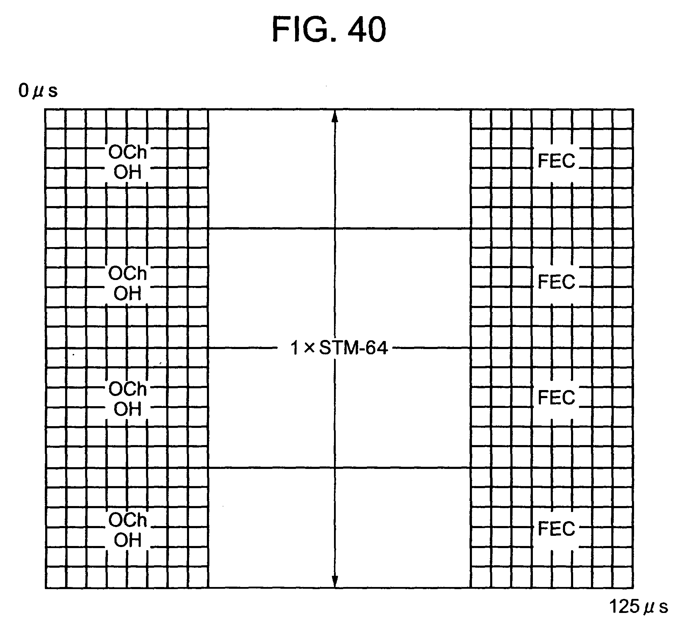

A single STM-16 unit in an OCh frame with the A1 and A2 bytes removed is shown in FIG. 38. The same OCh frame format can be used to accommodate other SDH rate signals by mapping multiple client signal frames into each OCh frame for rates less than STM-16, or mapping each SDH frame into several OCh frames in multi-frame format in the case of rates higher than STM-16. In this way, the number of OCh overhead bytes per frame is the same for any client signal and the transmission rate can be preserved for any SDH framed signal. Examples of an STM-4 and STM-64 mapping to the OCh frame are shown in FIGs. 39 and 40, respectively.

In the STM-4 case of FIG. 39, the number of OCh frame OH and FEC bytes is equal to the number of A1 and A2 bytes in four STM-4 frames, and the number of client signal bytes equal to the total number of bytes in four STM-4 frames excluding the A1 and A2 bytes. Similarly, for an STM-64 of FIG. 40, the number of OCh frame OH and FEC bytes is equal to ¼ the number of A1 and A2 bytes in one STM-64 frame, and the number of client signal bytes is equal to ¼ the number of total bytes in the STM-64 frame, excluding the A1 and A2 bytes.

In the case of non-SDH signals, there are two techniques that can be used. If a signal does not have a full SDH format but does include a minimum of the A1 and A2 bytes, the mapping to the OCh frame can be accomplished in the same way as described for SDH format signals. The same mapping mechanism can be used for any fixed framing pattern whether or not they correspond to A1 and A2 bytes. This case also allows for a preservation of the transmission rate of the signal. A non-SDH client signal that does not include A1 and A2 bytes would be mapped in its entirety into an OCh frame. At the OCh trail termination point, the entire signal would be demapped from the OCh frame and fully restored.

This format provides transparent transport for SDH signals, or signals including at a minimum the SDH defined A1 and A2 framing pattern, by transporting all bytes except for the A1 and A2 bytes which are then replaced at the OCh trail termination point. Other non-SDH signals are transparently transported in their entirety.

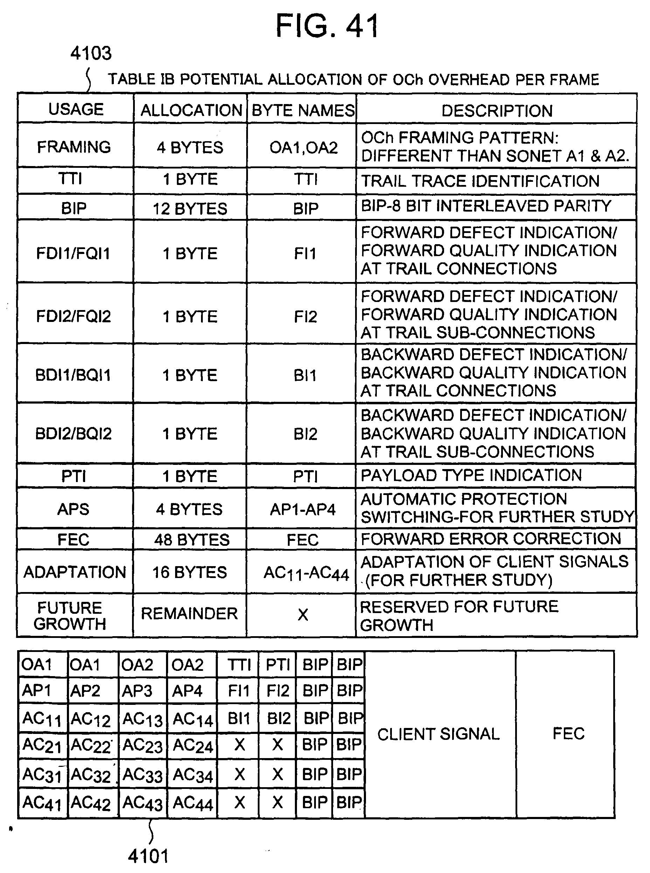

As seen in the table 4103 in Fig. 41, the forty-eight bytes of overhead provided in the OCh frame structure would support the requirements of G.872 as well as provide growth for other potential overhead uses. An example of a potential assignment in the OCh OH frame is shown in table 4101 of FIG. 41.

The required OCh frame overhead makes up only about 0.24% of the signal bandwidth. Yet, in the case of an STM-4 mapping, this is equivalent to a data rate of about 24 Mb/s. The basic OCh frame structure is independent of the client signal transmission rate. The described methods and apparatus of the invention provide an OCh overhead implementation which meets the requirements of G.872 and provides the further advantages of rate preservation for SDH client signals, rate independence and efficient usage of bandwidth.

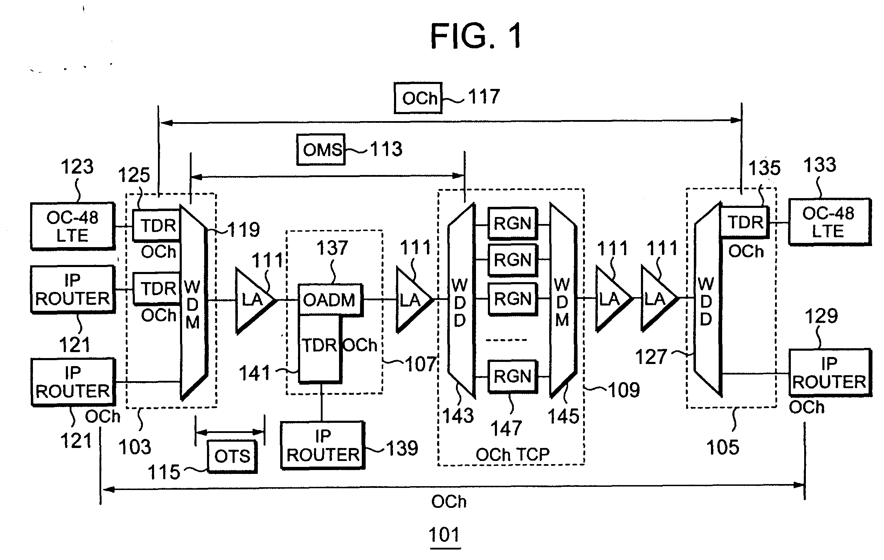

FIG. 1 illustrates an OCh, OMS, and OTS layers of the Optical Transport Network (OTN) for which the methods and apparatus of the present invention may be used. In this example, network 101 includes a transmitting node 103, a receiving node 105, an add/drop multiplex node 107 and a regeneration node 109. Also included in network 101 are Line amplifiers 111 for boosting the optical signals. The three layers of overhead associated with different portions of the OTN are
- (1): Optical Multiplex section (OMS) 113 that includes overhead data for a multi-wavelength signal transmitted between the transmitting wavelength multiplexer and a wavelength demultiplexer (or between a wavelength multiplexer and an add/drop multiplexer);
- (2): the Optical Transport section 115 that includes overhead data for the multi-wavelength signal transmitted between the transmitting multiplexer and a line amplifier or between line amplifiers; and
- (3): the Optical Channel (OCh) 117 which includes overhead data for a single wavelength signal transmitted from its entry into the network to its exit from the network. The OCh channel overhead is required for each signal transmitted at a different wavelength part of a wavelength multiplexed signal. The problem of including OCh channel overhead data is solved by the invention.

Referring to FIG. 1, transmitting node 103 includes a Wavelength Division Multiplexer 119 for multiplexing multiple signals with different wavelengths and transponders TDR 125 for converting signals to include the additional OCh overhead data. Connected to transmitting node 103 are IProuters 121 and an OC-48 LTE 123, the signals of which are transported by the network. Receiving node 105 includes a Wavelength Division Demultiplexer 127 for demultiplexing the received signal and TDR 135 for converting signal to delete the additional OCh overhead data. Connected to receiving node 105 are IProuters 129 and OC-48 LTE 133. Add/Drop multiplex node 107 includes an OADM 137 for adding or dropping a signal via a multiplexer and TDR 141 for separating out one of the multiplexed signals and converting it by removing the additional OCh overhead data. Connected to add/drop multiplexer node 107 is IProuter 139. Regeneration node 109 includes a Wavelength Division Demultiplexer 143, Wavelength Division Multiplexer 145, and RGN 147 for regenerating the OCh signals and for monitoring the inserted OCh overhead data.

In order to access the various overhead and payload bytes of a signal, the receiving node must know where the signal starts so that it can properly deconstruct the signals to obtain the embedded data. The standard way of marking the beginning of a data stream is with A1 and A2 OCh synchronisation bytes which are repeated so that they can be identified by the receiving demultiplexer. Prior standards call for the A1 and A2 bytes to be repeated many times in order to properly identify them. Once the demultiplexer detects the repeating bytes, it can then read the overhead bytes and process the message. In the present invention, in order to provide additional overhead information into the same frame size, most of the synchronisation bytes, which do not contain any material information, are replaced with the additional OCh header information. A reduced number of new overhead synchronisation bytes are then inserted into the header information prior to being multiplexed. This allows the header information to be transported with the signal without the need for extra bytes and an increase in transmission speed.

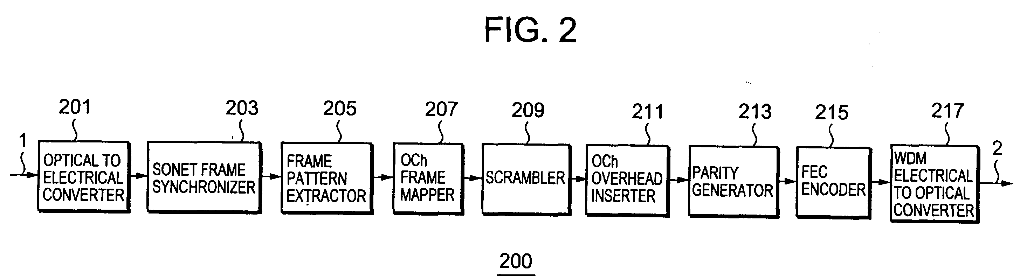

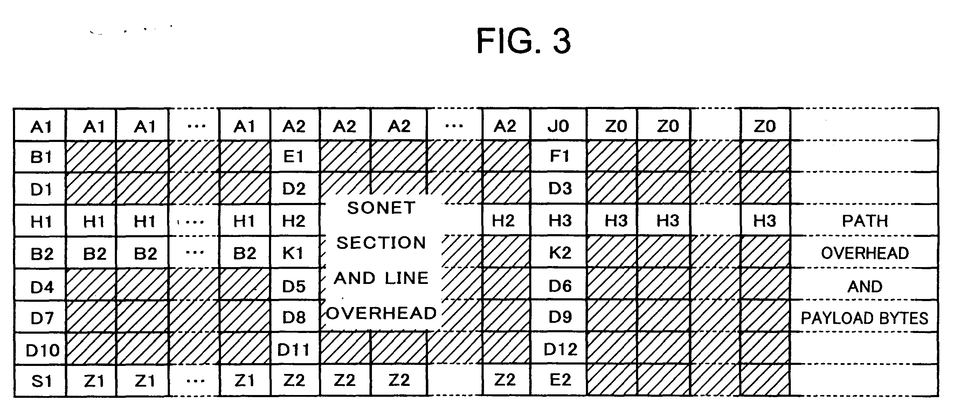

FIG. 2 illustrates a digital transmission frame converting apparatus 200 implemented in accordance with a first preferred embodiment of the present invention. The apparatus in FIG. 2 comprises an Optical to Electrical Converter 201, a SONET Frame Synchroniser 203, a Frame Pattern Extractor 205, an OCh Frame Mapper 207, a Scrambler 209, an OCh Overhead Inserter 211, a Parity Generator 213, FEC Encoder 215 and a WDM Electrical to Optical Converter 217. A digital signal of a first type or format referred to herein as type 1, includes a repeating set of fixed value framing bytes, A1 and A2, as shown in FIG. 3. The value of the A1 and A2 bytes in this example are "11110110" and "00101000", respectively. For purposes of explanation, an exemplary type 1 digital signal (digital signal 1) will be referred to in the description.

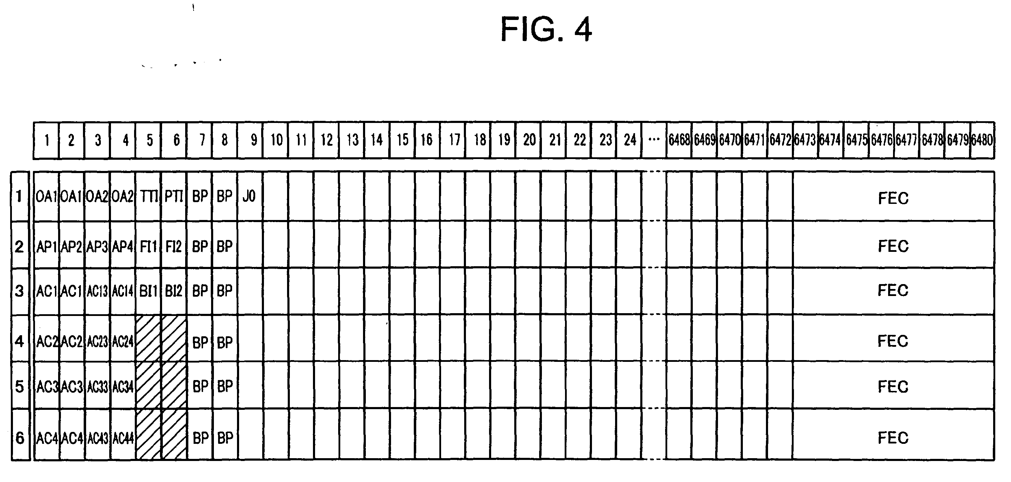

A digital signal of a second type, referred to herein as type 2, includes the data and overhead bytes of a type 1 digital signal, e.g., a type 1 signal from which it is created, excluding the A1 and A2 framing bytes. A type 2 signal has preferably two 0A1 and 0A2 bytes and additional overhead bytes, not present in a type 1 signal, as shown in FIG. 4. Most of the A1 and A2 synchronisation bytes have been replaced with the additional overhead bytes. For purposes of explanation, an exemplary type 2 digital signal (digital signal 2) will be referred to in the description. In the various described embodiments of the present invention, the transmission rate of digital signals 1 and 2 are preferably the same.

A further description of the converting apparatus 200 follows. The optical digital signal 1 is converted to an electrical signal by the optical to electrical converter 201. The SONET frame synchroniser 203 locates the position of the A1 and A2 bytes in the digital data stream, allowing the frame pattern extractor 205 to delete the A1 and A2 bytes. The remaining bytes are then mapped into the OCh frame structure by the OCh frame mapper 207. The digital signal is converted by adding a pseudo-random pattern by the scrambler 209 in order to prevent long intervals without a transition from "0" to "1" or "1" to "0". If a long interval was present, it could effect the deconverting apparatus' ability to read the data stream. Scrambling is used to ensure that a sufficient minimum number of signal transitions occur to permit a receiving device to drive a clock used for signal re-timing. Similar techniques have generally been used in transmission systems to ensure that timing acquisition can be achieved by the receiving apparatus. However, in the case of multi-wavelength transmission including the use of line amplifiers, there is an additional problem that the power into a line amplifier needs to be kept constant and that the differential of power level between each of the optical wavelengths needs to be minimised. Scrambling helps to solve this problem since randomising the occurrence of transitions of each single wavelength optical signal acts to minimise fluctuation of both the optical power level of each single wavelength signal and the total multi-wavelength power.

OCh overhead bits are inserted into the portion of the OCh frame structure 2 allocated for overhead as shown in FIG. 4 by the OCh Overhead Inserter 211. The inserted OCh overhead bytes are inserted into space made available because of the removal of the A1 and A2 bytes. Even 16 bit parity is calculated over a row of payload data of the OCh frame by the parity generator 213 and the resulting value written into the bytes labelled BIP (bit interleaved parity) of the next row of the subsequent OCh frame. The forward error correction (FEC) Encoder 215 calculates a forward error correcting code over the entire row and the resulting value written into the bytes labelled FEC of the same row of the same OCh frame. The WDM Electrical to Optical Converter 217 converts the digital electrical signal to a digital optical signal of a particular wavelength to be wavelength division multiplexed. Note that other parity schemes can be used, e.g., the parity could alternatively be odd. The operations performed by the scrambler 209, the OCh overhead inserter 211 and the parity generator 213 can be performed in any order. One or more of the functions or modules described in connection with converter 200 can be performed in software, firmware, hardware or any combination of these. One or more function blocks in FIG. 2 (or on the other Figures) can be performed by software running on a general purpose computer processor.

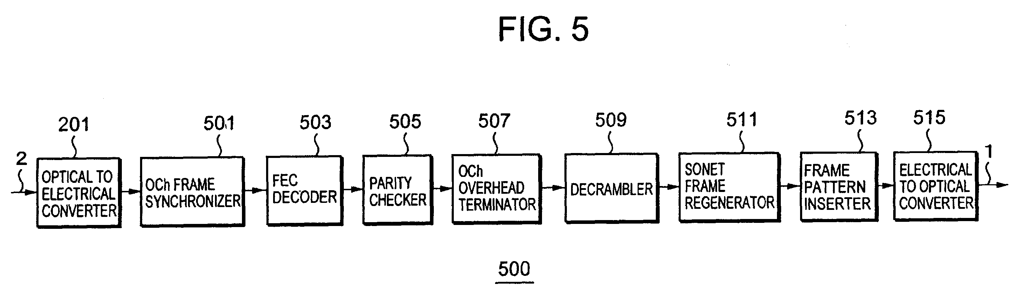

FIG. 5 illustrates a digital transmission frame converting apparatus 500 of the first preferred embodiment for the reverse (or inverse) conversion from an optical digital signal 2 to an optical digital signal 1. The apparatus 200, 500 form a complementary functional pair for both the conversion and transmission from a signal 1 to a signal 2 as well as the receipt and conversion of a signal 2 to a signal 1.

The reverse conversion apparatus 500 comprises an optical to electrical converter 201, an OCh frame synchroniser 501, an FEC decoder 503, a parity checker 505, an OCh overhead terminator 507, a descrambler 509, a SONET frame regenerator 511, a frame pattern inserter 513 and an electrical to optical converter 515. Digital signals 1 and 2 are as described previously. However, in circuit 500 of FIG. 5, signal 2 is the input signal while signal 1 is the output signal.

In the reverse direction, signal 2 is converted to an electrical signal by an optical to electrical converter 201, and the OCh frame is located by the OCh frame synchroniser 501 by detection of the fixed pattern of the OA1 and OA2 bytes of the OCh frame. The values of the OA1 and OA2 bytes may be different from the A1 and A2 bytes. One possible example of values that could be used for the OA1 and OA2 framing pattern bytes are "00001001" and "11010111", respectively. The FEC decoder 503 decodes the FEC code of each row of the OCh frame for the same row data of the same frame and corrects any identified errors. The parity checker 505 then compares the BIP values for each row with the calculated parity of the same row of the previous frame to detect any errors that could not be corrected by the FEC. The OCh overhead terminator 507 extracts the OCh overhead bits so that only the data of the original signal 1 remains. The descrambler 509 converts the received signal with an added pseudo-random digital signal back to its original data pattern. The SONET frame regenerator 511 regenerates the original frame structure of signal 1, and the A1 and A2 bytes are re-inserted by the frame pattern inserter 513. The A1 and A2 bytes are preferably set forth in a standard so are known. Alternatively, the synchronisation information could be transmitted within the overhead. The electrical to optical converter 515 performs the last step in restoration of the optical digital signal 1. Signal 1 is fully restored without any loss of data. One or more of the functions or modules described in connection with converter 500 can be performed in software, hardware, firmware or any combination of the above.

The first embodiment of the invention illustrated in FIGs. 2 and 5 has the ability to convert signal 1 into signal 2 including the additional data in the form of OCh overhead. The OCh overhead may be included without requiring any change in transmission rate since the overhead data replaces the framing bytes removed from signal 1. The first embodiment has the additional advantage in that the data of signal 1 is restored in its entirety from signal 2 through an inverse conversion process that restores the A1 and A2 bytes that were previously removed.

In the described example of the first embodiment, the description was in terms of a SONET frame synchroniser 203 for optical signals, and SONET frame regenerator 511, the frame pattern of signal 1 that is located and extracted by the frame pattern extractor 205 and then in the reverse process inserted by the frame pattern inserter 513. The signals' frames used with this invention can include a SONET frame format as defined in ANSI "Synchronous Optical Network (SONET) - Basic Description Including Multiplex Structure, Rates, and Formats" T1.105-1995, in an SDH frame format defined in ITU-T "Network node interface for the synchronous digital hierarchy (SDH) G.707 (3/96) or in some other frame format. Furthermore, signal 1 need not be of any particular format other than that it is digital and includes some number of bits of a repeating fixed value pattern, e.g., a frame byte, in its format. The repeating fixed value bits can be removed and replaced in accordance with the present invention in the same manner as described for the exemplary A1 and A2 bytes. All references to SONET herein also apply to SDH format or other formats with repeating fixed value patterns.

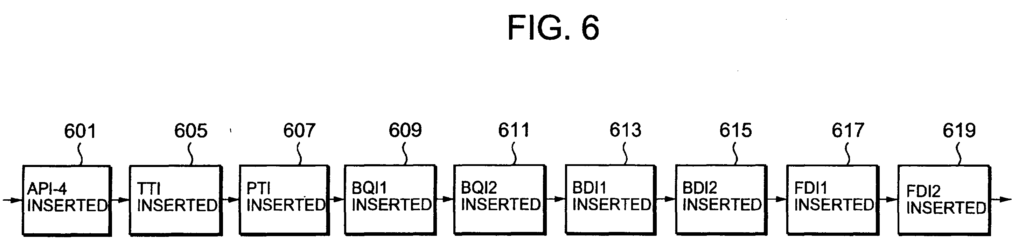

FIG. 6 provides an example of information bits that could be inserted by the OCh overhead inserter 211 of the first embodiment. The overhead data can be inserted by separate inserters or in an ordered data stream controlled by a single inserter. Inserters for the following exemplary types of overhead can be provided: AP1-4 601: information bits for automatic protection switching signalling; TTI 605: information bits providing a unique identifier of signal 2; PTI 607: information bits indicating the type of signal 2; BQI 1 609: a category 1 of count of the number of bit parity errors detected in signal 2 in the reverse direction; BQI 2 611: a category 2 of count of the number of bit parity errors detected in signal 2 in the reverse direction; BDI 1 613: a category 1 indication of defects detected in signal 2 in the reverse direction; BDI 2 615: a category 2 indication of defects detected in signal 2 in the reverse direction; FDI 1 617: a category 1 indication of defects detected in signal at a prior point in signal flow in the same direction; and FDI 2 619: a category 2 indication of defects detected in signal at a prior point in signal flow in the same direction.

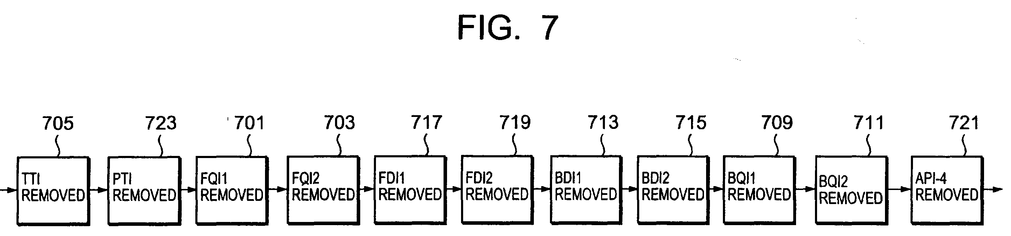

In FIG. 6, BQI1 Inserted 609 will insert errors detected by Parity Checker 505 of FIG. 5 for the previous frame. In FIG. 6, if the equipment is provisioned as a sub-network connection point, BQI2 Inserted 611 will insert the value that is the result of the errors detected by Parity Checker 505 less the number of errors read by FQI2 Removed 703 of FIG. 7.

In order to allow bit error measurements for specific spans, a particular combination of spans (i.e., a sub-network), as well as end to end, it is necessary to define multiple categories of FQI and BQI. However, it is not necessary to define and allocate overhead for multiple sublayers of BIP code. Although in the case of SDH, unique BIP bytes were defined for each of the Regeneration Section, Multiplex Section and Path layers, it is in fact possible for the FQI and BQI of different categories to utilise the same BIP code.

An FQI signal is similar to the Incoming Error Count defined in the SDH tandem connection approach (G.707, Annex C). However, this technique can be used to enable the isolation of errors to individual spans as well. A FQI2 and BQI2 allow for errors to be isolated to a particular sub-network, and thus for the monitoring of BER of each sub-network. FQI1 enables the isolation of errors and calculation of BER for each individual span. A. BQI2 or BQI1 allows an upstream originating equipment to monitor sub-network or end to end bit errors in the case that the sub-network connection or OCh termination point is outside of the local management domain.

One byte each is allocated for the following quality indications. In the case of a 12-byte BIP allocation, one byte is enough to accommodate the maximum of 96 bit errors that can be detected. The quality indications can be as follows:
Forward Quality Indication (FQI1) - Category 1 (section or single span) Forward Quality Indication sent downstream from each OCh regeneration equipment;
Backward Quality Indication (BQI1) - Category 1 Backward Quality Indication sent upstream by OCh Termination Equipment;
Sub-Network Forward Quality Indication (FQI2) - optional Category 2 Forward Quality Indication sent downstream from sub-network connection point; and
Sub-Network Backward Quality Indication (BQI2) - optional Category 2 Backward Quality Indication sent upstream from sub-network connection point.

FIG. 7 illustrates the corresponding expansion of the OCh overhead terminator 507 in the first embodiment. OCh overhead data collected at the terminator includes the same overhead information as described in FIG. 6 (e.g.; TTI 705, PTI 723, FDI1 717, FDI2 719, BDI1 713, BDI2 715, BQI1 709, BQI2 711 and API1-4 721) and can also include the following overhead data added during the transmission: FQI 1 701: a category 1 of count of the number of bit parity errors detected in signal 2 at a prior point in signal flow in the same direction; and FQI 2 703: a category 2 of count of the number of bit parity errors detected in signal 2 at a prior point in signal flow in the same direction.

In FIG. 7, BQI1 Removed 709 reads the number of errors indicated. This is the number of errors detected at the far-end OCh termination equipment for the end-to-end OCh (origination to termination). Also in FIG. 7, if the network element is provisioned as a sub-network connection point, BQI2 Removed 711 will read the number of errors indicated This is the number of errors detected for the reverse direction at the just previous sub-network connection point for the OCh sub-network (the number of errors for transmission from this sub-network connection point equipment to the next sub-network connection point equipment in the reverse direction).

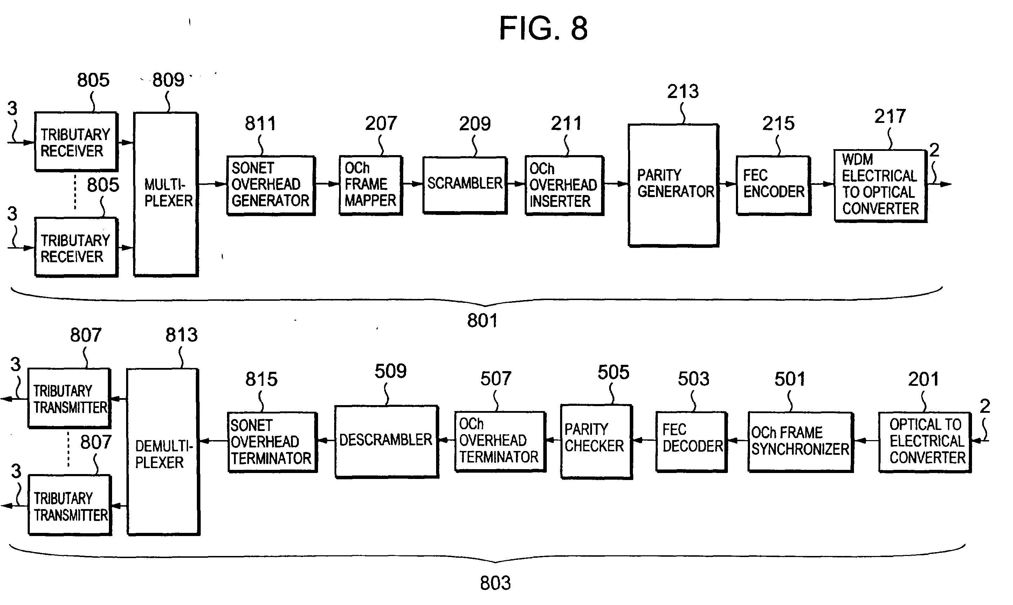

FIG. 8 illustrates a second embodiment of the present invention that includes a digital frame converting apparatus 801 for inserting the OCh header data and a digital frame converter apparatus 803 for removing OCh header. The common elements within the first embodiment are indicated with the same reference number and the earlier description applies for those elements. Apparatus portions in FIG. 8 common with the first embodiment shown in FIG. 2 are OCh Frame Mapper 207, Scrambler 209, OCh Overhead Inserter 211, Parity Generator 213, FEC Encoder 215 and WDM Electrical to Optical Converter 217. Apparatus portions common with FIG. 5 are Optical to Electrical Converter 201, OCh Frame Synchroniser 501, FEC Decoder 503, Parity Checker 505, OCh Overhead Terminator 507 and Descrambler 509. The following apparatus portions from FIGs. 2 and 5 are not included in this embodiment: optical to electrical converter 201, SONET frame synchroniser 203, frame pattern extractor 205, SONET frame regenerator 511, frame pattern inserter 513, and electrical to optical converter 515. In place of the removed portions are added multiple tributary receivers 805 and tributary transmitters 807, a multiplexer 809, SONET overhead generator 811, demultiplexer 813, and SONET overhead terminator 815. Signal 3 is an SDH formatted digital signal.

Each tributary receiver 805 receives and conditions a signal 3 that is then time division multiplexed with the other signals from the other tributary receivers 805 by the multiplexer 809. SONET section and line overhead except for the A1 and A2 bytes is added to signal by the SONET overhead generator 811 in converter 801. The SONET overhead terminator 815 extracts the section and line overhead from the signal from the OCh overhead terminator 507 in converter 803. The signal is then demultiplexed and distributed to the corresponding tributary transmitters by the demultiplexer 813. The tributary transmitter 807 conditions and transmits signal 3. The OCh frame mapper 207, OCh overhead terminator 507 and other apparatus components common to the first embodiment are operated as previously described in regard to the first embodiment.

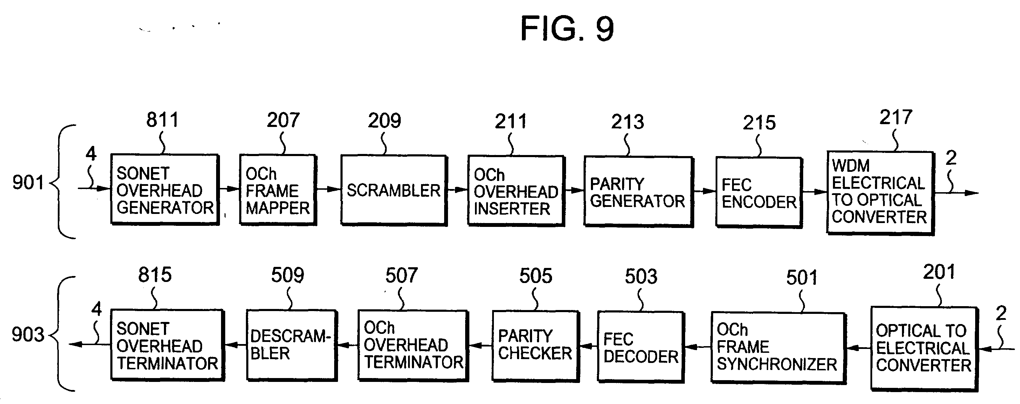

FIG. 9 illustrates a third embodiment which is similar to the FIG. 8 embodiment except that the apparatus portions corresponding to the FIG. 8 tributary receiver 805, multiplexer 809, tributary transmitter 807 and demultiplexer 813 are excluded. In the FIG. 9 embodiment, the conversion is between a digital signal 4 and signal 2. The digital signal 4 is electrical and has a format as in FIG. 3 but including only the path overhead and payload bytes. A converter 901 is shown for adding the overhead to the signal and a converter 903 is shown for removing the overhead data.

The SONET overhead generator 811 adds to signal 4 the SONET section and line overhead as shown in FIG. 3 but excluding the A1 and A2 frame pattern bytes. The OCh frame mapper 207 then maps the data into the OCh frame as in described in the first embodiment. In the reverse conversion process the OCh overhead terminator 507 extracts the OCh overhead as described in the first embodiment. In this case the SONET section and line overhead bytes included in the remaining data are extracted by a SONET overhead terminator 815, restoring the digital signal 4.

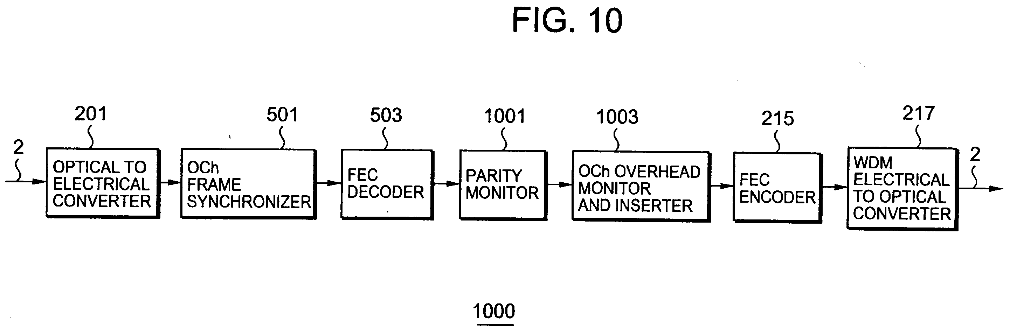

A fourth embodiment is shown in FIG. 10. In this case there is no conversion of overhead bytes in the signal but rather signal 2 is regenerated after it has been monitored. The monitoring apparatus 1000 performs the following functions:
(1) converts the optical signal to an electrical signal,
(2) synchronises the overhead frame so that it can be read,
(3) possibly decodes the error correction code,
(4) checks the parity of the data to determine errors,
(5) monitors the OCh overhead,
(6) possibly inserts any new overhead information,
(7) performs FEC encoding and
(8) converts the electric signal to an optical signals.
The apparatus includes an optical to electrical converter 201, OCh frame synchroniser 501, FEC decoder 503, parity monitor 1001, OCh overhead monitor and inserter 1003, FEC encoder 215, and WDM electrical to optical converter 217.

The operation of the optical to electrical converter 201, OCh frame synchroniser 501, and FEC decoder 503 is described in regard to FIG. 5 of the first embodiment. The operation of the parity monitor 1001 is the same as for the parity checker 505 of the first embodiment except that the BIP overhead information bits in the signal are monitored and therefore left fully intact. The OCh overhead monitor and inserter 1003 monitors the other OCh overhead information bits. Certain of these overhead bits may be overwritten with new values, but all overhead bits are either monitored and left unchanged, or monitored and then replaced with new values. The FEC encoder 215 and WDM electrical to optical converter 217 are operated as in the first embodiment. The inclusion of the FEC Decoder 503 and the FEC Encoder 215 is optional. If the FEC Decoder 503 and FEC Encoder 215 are included, then the parity monitor 1001 may be located either before of after the decoder and/or encoder. While these functions or modules are described with respect to separate apparatuses, they can be implemented in software, hardware or firmware or in any combination.

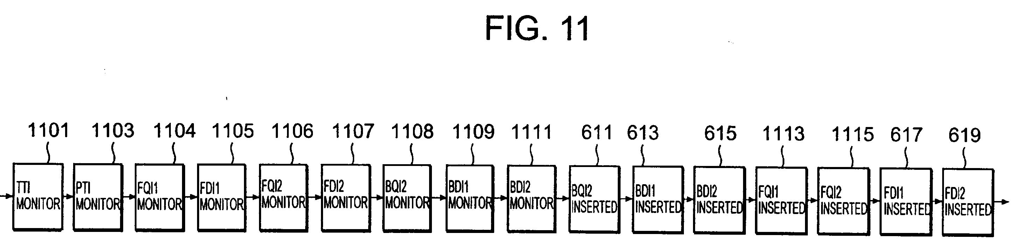

FIG. 11 provides an example of information bits that could be monitored and inserted by the OCh overhead monitor and inserter 1003 of the fourth embodiment. The overhead bytes are as described as in the first embodiment. The following bits are monitored in this example: TTI 1101, PTI 1103, FQI1 1104, FDI1 1105, FQI2 1106, FDI2 1107, BQI2 1108, BDI1 1109 and BDI2 1111. The following bits are inserted this example: BQI2 611, BDI1 613, BDI2 615, FQI1 1113, FQI2 1115, FDI 1 617 and FDI2 619.

In FIG. 11, FQI1 Inserted 1113 will insert the number of errors detected by Parity Monitor 1001 of FIG. 10 for the previous frame. FQI2 Inserted 1115 will insert the number of errors detected by Parity Monitor 1001 of FIG. 10 for the previous frame if the equipment is provisioned as a sub-network connection point. If the equipment is not provisioned as a sub-network connection point, the FQI2 overhead value will be passed unchanged.

In FIG. 11, FQI1 monitor 1104 will read the number of errors indicated. This value will be subtracted from the number of errors detected by Parity Monitor 1001 of FIG. 10 to give the number of errors that occurred since transmission by the just previous OCh origination or regeneration equipment. Also in FIG. 11, if the equipment is provisioned as a sub-network connection point, the BQI2 Inserted 611 will insert the value that is the result of the errors detected by the Parity Monitor 1001 of FIG. 10 less the number of errors read by FQI2 Monitor 1106. If the equipment is not provisioned as a sub-network connection point, the BQI2 overhead value will be passed unchanged

In FIG. 11, if the equipment is provisioned as a sub-network connection point, BQI2 Monitor 1108 will read the number of errors indicated This is the number of errors detected for the reverse direction at the just previous sub-network connection point for the OCh sub-network (the number of errors for transmission from this sub-network connection point equipment to the next sub-network connection point equipment in the reverse direction).

The fifth embodiment provides additional functionality to the equipment described in the first embodiment to provide the capability to time-division-multiplex lower data rate tributary signals into the main OCh data channel. This additional functionality provides the same signal rate preservation and transparent data transport functionality as is described for the line signals in the first embodiment. Tributary signals are used to provide A1 and A2 framing bytes as described in ANSI T1.105 and ITU-T G.707 and maintain a signal data rate consistent with the synchronisation requirements for SONET and SDH as described in ANSI T1.105 and ITU T G.707, respectively. The equipment (and/or software) described in this embodiment will be referred to as a Transmultiplexer.

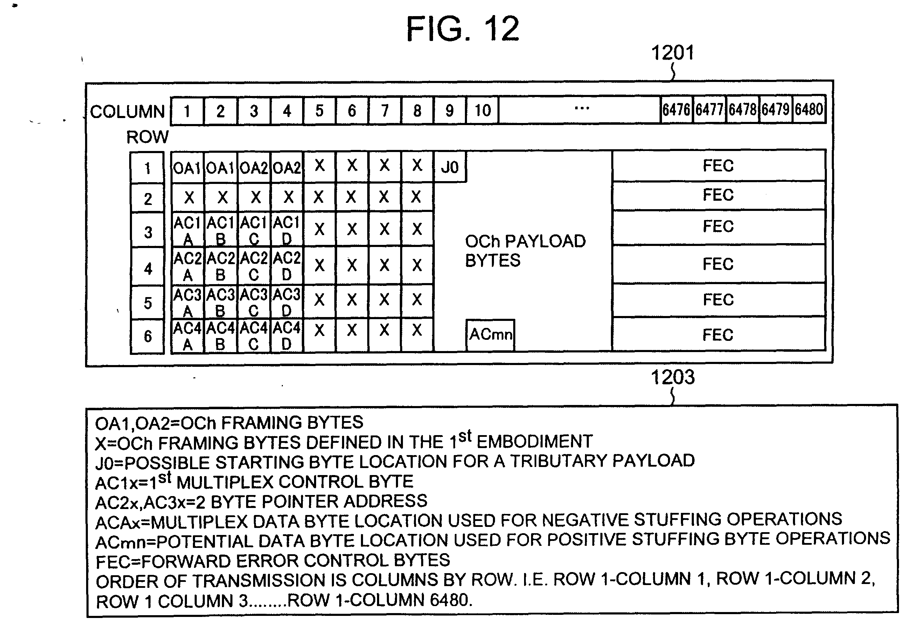

The operation of the Transmultiplexer will utilise the ACxy bytes as in the OCh frame structure shown in FIG. 12. The frame structure is shown in box 1201 and a legend key for the data shown is in box 1203. This frame structure includes portions described in the first embodiment. The ACxy bytes provide information regarding the tributary data rates and provide synchronisation signals to align the tributary data within the OCh line signal, and to convey the tributary frequency information to the other end of the transmission line.

In Time-Division-Multiplexing ("TDM"), the output data stream is divided into portions for transmission of data from a given number of tributary inputs and portions for transmission of OCh overhead. External client signals are connected to the tributaries, where the data stream is read into the multiplexer and prepared for transmission on the output line. In the process of adapting multiple client signal to the OCh line signal using TDM techniques, it is necessary to provide for the difference between the frequency of the client signal and that of the OCh tributary bit stream assigned to the client. This is accomplished by a process called pulse stuffing. The output signal time slots assigned to each tributary client signal occur at a regular rate proportional to the output line signal and are interleaved with the time-slots of other client signals.

The frequency of the data stream formed by these tributary time slots can be different than that of the client signal. Without a process to adjust the tributary data transmission rate; when the data stream frequency is slower than the client signal, data will be lost as the client signal data read into the multiplexer overtakes the capability of the multiplexer to accept data. Likewise, if the frequency of the tributary data stream is faster than the client signal, some client data will be transmitted multiple times unless preventative measures are taken.

To overcome the difference in rate where the client signal rate is faster than the tributary rate, pulses are "stuffed" into the data stream. That is, extra time slots in the outgoing OCh line signal overhead are provided for client signal data. These extra time slots are the ACxD bytes in the OCh overhead. When negative/subtractive pulse stuffing is signalled by the other ACxy bytes, these byte positions will be used to transport client signal data.

In the case where the client signal data rate is slower than the tributary rate, a time slot normally assigned to that tributary data will be vacated as part of the positive/additive pulse stuffing process. These time slots appear in the positions designated as ACmn. When the ACxy bytes signal that a positive/additive pulse stuffing process is necessary, the client signal data will be prevented from occupying its regular time slot in the designated ACmn position. In this way, it's transmission progress is restrained to achieve a data rate match with the tributary data rate.

The pulse stuffing process described can also be applied to SONET applications. The main difference for SONET applications is the addition of the Master Control Acx1 byte to designate a client signal level and the appearance of a stuffing message.

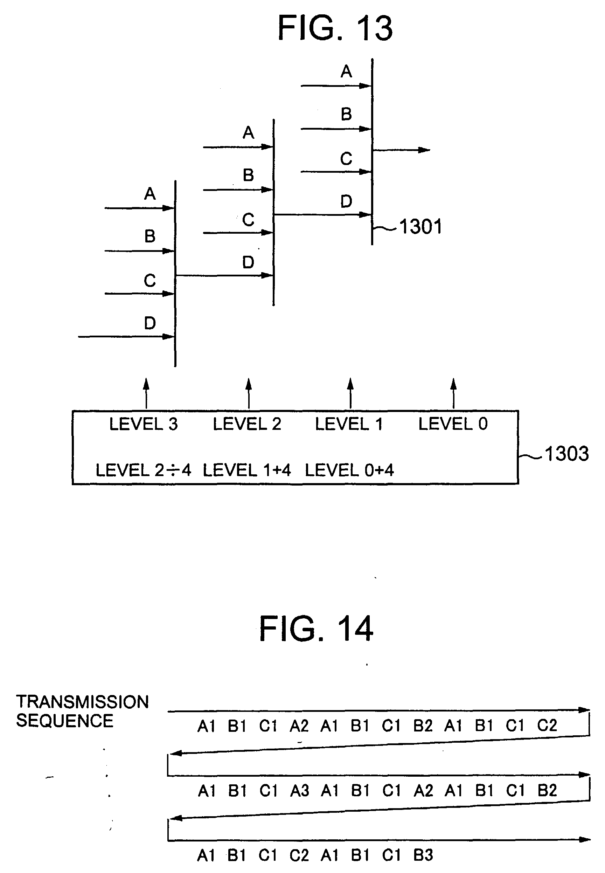

The multiplex structure in this invention preferably provides for 3 levels of tributary signals. However, the level of tributary signals can vary: Each level of signal is related to the next higher level by a factor of 4 in this example. The relationship of the levels is shown in FIG. 13. The tributaries are shown in graph 1301 and the level labels are indicated in box 1303. Thus Port D of Level 1 will support the multiplexing of 4 tributaries at Level 2. The other ports (A, B, C) of Level 1 can also support the multiplexing of 4 other tributaries of Level 2. Port D of the Level 2 inputs will support 4 of the Level 3 tributaries. The other ports (A, B, C) of Level 2 can also support the multiplexing of 4 other tributaries at Level 3. If all tributaries are only Level 1 type with no sub-multiplexing, there will be 4 tributaries. If all tributaries are level 2 type, there will be a total of 16 tributaries; and if all tributaries are level 3 type, there will be 64 tributaries. The structure and process allows for the mixture of tributaries' levels. Signal multiplexing to the OCh line data channel will be accomplished by a byte interleaving process by level as is shown, in FIG. 14. FIG. 14 shows that each Level 1 tributary is processed in sequence. If a sub-tributary is being utilised, the tributaries in the lower level will be sent in order at a rate 4 times slower than the Level 1 tributaries. Building of the structure in this way allows the multiplexing process to be applied to various line rates with the same methodology. Synchronisation of the tributary to the OCh line rate utilises a similar pointer process that is used in SONET/SDH signals as described in ANSI T1.105, and ITU-T G.707. In each OCh frame there are four AC1 bytes, four AC2, four AC3, four AC4 and four ACmn bytes. The AC1 bytes are to be used for control of the Pointer Processor and to signal the Tributary signal level. As in the SONET/SDH method, the AC2 and AC3 byte provide the pointer address of the beginning of the tributary data within the OCh frame and stuff control function; and AC4 provides the negative stuff opportunity (for changing transmitter rates) for the pointer processor. The positive stuff opportunity will utilise the first available data byte for the affected tributary path following the AC4x byte.

The OCh frame shown in FIG. 12 contains 6480*6 = 38880 bytes (row length multiplied by column length) which equates to 311040 bits. This is the same number of bits as in a SONET/SDH OC-48/STM 16 frame. In the OCh frame, there are four (4) stuffing message/opportunity groups in each frame; each group provides 8 bits of stuffing opportunity. This means that there are 64000 stuffing bits/s when the OCh line rate is the same as an OC-48. As the line rate increases, so does the stuffing rate because the OCh frame size stays the same causing the number of available stuffing bits to increase. Thus at the SONET/SDH OC-192/STM-64 rate, there are 256000 bits/s/port.

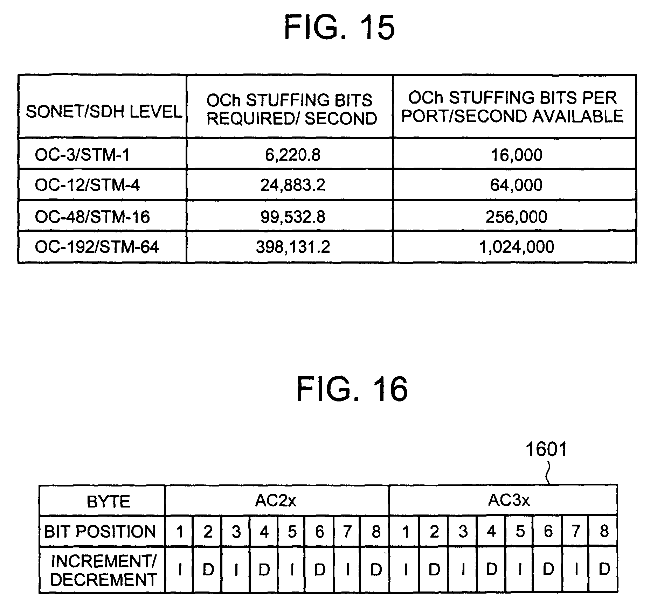

If the internal clock of the transmultiplexer has a ±20 parts-per-million stability and the tributary rates are the same, there is the possibility of a 40 parts-per-million difference. The following number of bits for stuffing is shown in the table in FIG. 15. FIG. 15 also indicates the number of stuffing bits available per second for each tributary port rate. The Figure indicates that there is an adequate number of stuffing bits available if stuffing adjustments occur every frame or are not limited to less than one stuffing opportunity every two frames. This differs from the SONET/SDH limit of no more than one stuffing opportunity every three frames.

As in SONET, it is proposed that an increment-decrement structure be used for pointer adjustments. FIG. 16 illustrates the position of the Increment (I) and Decrement (D) bits within the two data bytes in table 1601. The actions of these bits will be similar to those of the SONET/SDH pointer bytes in the following manner:
- (1): When a positive stuffing action is needed, the current pointer byte will be sent with the I-bits inverted. The subsequent positive stuff opportunity for the affected tributary is considered an undefined byte. Subsequent pointer counts contain the previous pointer value incremented by one.
- (2): When a negative stuff is needed, the current pointer value is sent with the D-bits inverted. The subsequent AC4x byte for the affected tributary will be overwritten with a payload byte from the affected tributary data stream. Subsequent pointer values contain the previous pointer decremented by one.
- (3): If alignment with the tributary payload is lost, a new pointer value will be sent. When the receiver detects the new value in two sequential OCh frames with the applicable tributary port address, the new pointer value will be established as the system value.
- (4): When the pointer is not used, AC2 and AC3 bytes are always zero if stuffing is not required. When a negative stuff is needed, the D-bits are inverted to all ones. When a positive stuff is needed, the I-bits are inverted to all ones.

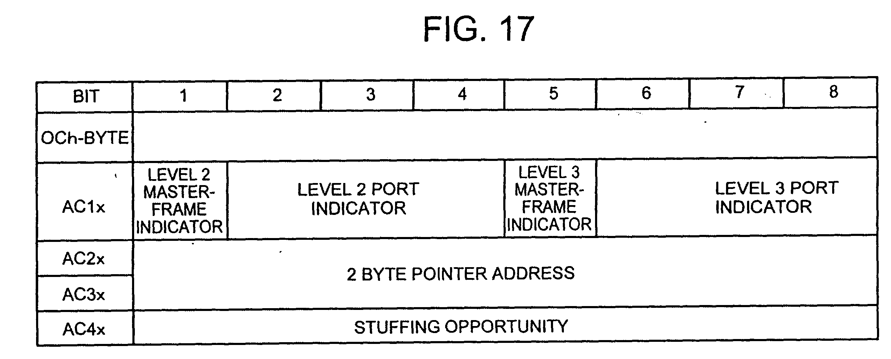

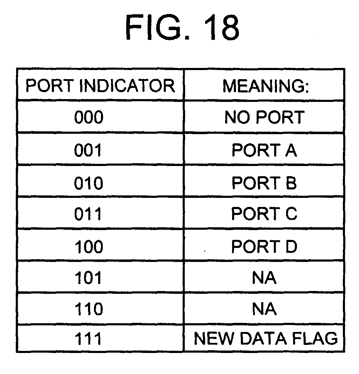

FIG. 17 illustrates the format of the 4 ACxy bytes for each level 1 tributary. The AC1y bytes first provide a Master Frame indicator of 1 bit which indicates the OCh frame in which the pointer addressing counter for the tributary path should be reset. Following this is a 3 bit indication of the tributary port (A, B, C, D) which is affected at Level 2. FIG. 18 describes the coding pattern used in this indication in table 1801. The next AC1 bit (bit 5) in FIG. 17 indicates the OCh frame start for a Level 3 pointer and is followed by the tributary indication (A, B, C, D). The coding for this 3 bit indicator is shown in FIG. 18.

The two bytes in AC2x-AC3x provide the sixteen bit address (tributary rate byte count) for the OCh payload location of the first byte in the tributary data path. These two bytes indicate the count of the applicable tributary data bytes in the OCh payload from the first appearance in the Master Frame to the location in the OCh payload that corresponds to the first byte of the tributary payload.

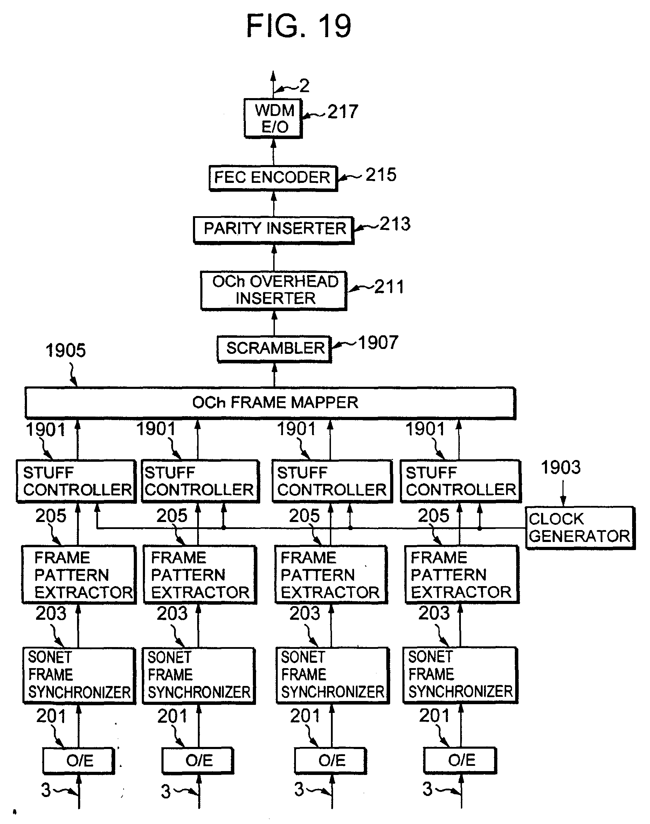

A block diagram of the multiplexing apparatus of the Transmultiplexer is shown in FIG. 19. Tributary signals 3 are detected in the Optical/Electrical Converters 201. The optical signals are converted to electrical signals; a received clock is developed from the incoming data; the electrical signal is sampled against a signal threshold; and a resulting electronic data pattern is passed to the SONET frame synchroniser 203. Circuitry in the SONET Frame synchroniser 203 searches through the incoming data pattern until it finds a pattern that matches the A1-A2 byte frame pattern for the tributary rate involved. After the frame synchronisation is established, information concerning the location of the A1 and A2 bytes is passed to the Frame Pattern Extractor circuitry 205. This circuitry deletes the A1 and A2 bytes and passes the remaining payload bytes along with a signal identifying the first data byte in the tributary payload to the Stuff Control device 1901.

The Stuff Control mechanisms 1901 provides an elastic buffer storage which permits writing of tributary data into the buffer using the recovered clock from the Optical/Electrical converter 201. At the same time, data can be read out of the elastic buffer storage at a rate determined by the clock signal from the Clock Generator 1903. The clock signal from the Clock Generator 1903 also establishes the data rate of the OCh signal 2. When the read address and the write address in the buffers get too close to each other, the appropriate stuff request (positive or negative) is developed and sent to the OCh Frame Mapper 1905.

The OCh Frame Mapper 1905 sequentially reads the data bytes from the Stuff control devices 1901 in accordance with the multiplexing structure shown in FIG. 13 and FIG. 14. If a stuffing action is required on one of the ports, the appropriate stuffing message is placed in the AC1y bytes. Also when a Master frame indicator appears, the AC1y byte is adjusted to show the appearance of the master frame.

To prevent clock recovery synchronisation problems at regenerators and the receivers of the Transmultiplexer, the Transmultiplexer provides scrambling. A clock recovery circuit in the OCh line O/E apparatus develops a clock signal from the incoming signal stream. This circuitry requires roughly an equal density of pulse (ones) signals and no-pulse (zeros) to develop a robust clock. Typically this will happen with normal traffic when all of the tributary units are installed and operating. The problem will occur when a transmultiplexer is installed with only a few tributaries or the tributaries do not have any incoming data. In this situation, there will be a large number of zeros in the OCh line signal making it difficult for the downstream equipment to recover clock. Therefore, it is necessary to install a frame-synchronous Scrambler apparatus 1907 to randomise the payload output of the OCh Frame Mapper 1905. The OCh overhead is not scrambled.

Following the scrambling function is the OCh Overhead Insertion 211 where the overhead bytes described in the first embodiment are inserted. After these bytes have been inserted, data parity is calculated and the results inserted in the appropriate overhead bytes by the Parity Insertion block 213 as described in the first embodiment. Forward Error Correction (FEC) circuitry 215 produces and inserts the appropriate control bytes in the overhead. This is followed by the Electronic to Optical conversion circuitry 217 which then develops an Non-Return-to-Zero (NRZ) or Return-to-Zero (RZ) optical signal.

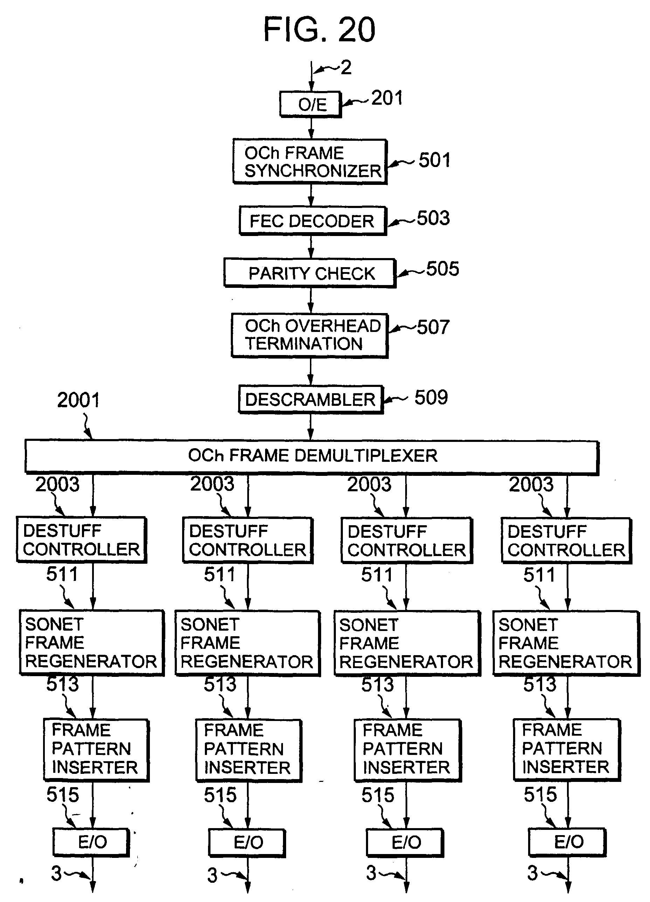

FIG. 20 provides a block diagram of the receiver of the Transmultiplexer. The OCh line optical signal 2 is received by the Optical to Electrical Converter 201, in which the optical signal is converted to an electronic signal, a clock signal is recovered for synchronisation; the electronic signal is periodically sampled and tested against a threshold at the recovered clock rate. The output of this apparatus is an electronic signal of "ones" and "Zeros" and the recovered clock.

The signal is fed to the OCh frame synchroniser 501, where OCh frame synchronisation is developed and to the FEC decoder 503 where data stream errors are detected and corrected using the FEC control bytes inserted in the frame. Parity of the data is then checked in the Parity Check circuitry 505. Errors detected at this level are reported to the management subsystems associated with the Transmultiplexer.

The OCh overhead described in the first embodiment is removed by the OCh Overhead Termination apparatus 507 leaving the scrambled payload data. After the signal is descrambled in the descrambler 509, the signal is passed to the OCh Frame demultiplexer 2001 along with the recovered clock and the OCh frame synchronisation data. In this example apparatus, the ACxy bytes are recovered and the tributary signal levels are determined. This is accomplished by reading the level and port indicators in the AC1y bytes. If the Level 2 and Level 3 indicators are 000, the data established for the primary port (A, B, C, D) is Level 1 data. If there is a Level 2 indicator (i.e. the Level 2 port indicator is non-zero), the data established for the primary point will be divided into four secondary level ports as determined by the three bits for the Level 2 Port indicator in the AC1y byte. If the Level 3 Port Indicator is non-zero, the data for the affected secondary Level 2 port indicated will be further divided into four tertiary level ports as determined by the three bits in the Level 3 port indicator.

As the data is passed from the OCh Frame Demultiplexer, it is accompanied by a clock signal and signals indicating the stuffing operations performed in the upstream multiplexer. The data passed to the Destuff Control 2003 is read into an elastic buffer. The clock signal is also modified to recreate a new tributary clock signal synchronous with the tributary rate at the input of the upstream multiplexer. This clock signal is used to read the data from the elastic buffer and pass the data to the SONET frame Regenerator 511, where the A1 and A2 byte sequence is developed. The frame sequence is inserted into the data stream by the Frame Pattern Inserter 513 just before the first payload byte as established by the pointer recovered from the OCh Frame demultiplexer 2001. The resulting electronic data stream is then a complete recreation of the tributary data at the upstream multiplexer port.

The final process in the receiver of the Transmultiplexer is to convert the electronic data signal into an optical format 3. This is accomplished in the Electronic to Optical converter 515.

A further discussion of the functionality of an embodiment of the insertion where the Transmultiplexer when all of the tributary signals are SONET/SDH signals and the DWDM line signal is at SONET/SDH line rates follows.

In one embodiment, the SONET/SDH framing structure preferably operates on a common frame rate (8000 frames/s) and frame period (125 µs). As the optical line rate gets higher, the frame rate and period remain the same. Increases in line rate are achieved at integer multiples of the 810 byte SONET STS frame. Each STS within the line rate carries it's own synchronisation information in the form of Hx bytes and it performs synchronisation by positive-zero-negative byte stuffing. Time Division multiplexing is accomplished by byte-multiplexing of every third STS signal.

The OCh frame utilises the excess A1 and A2 bytes in the SONET/SDH line signals. The basic OCh frame contains a fixed number of bytes determined from the number of A1 and A2 bytes in an OC-48 signal. Synchronisation and multiplexing will be accomplished using the ACxy bytes. Multiplexing in the OCh frame is a byte-by byte interleaving of 4 basic ports. Because of the fixed frame size in OCh, there are multiple OCh frames in the same time period of one SONET frame for SONET and OCh line rates above the OC-48 SONET line rate. The multiplexing processing involves removal of the A1 and A2 bytes, synchronisation of the OCh signal, determination of the FEC codes, insertion of the OCh framing signal bytes, and byte-by-byte time division multiplexing. On the receiving end, the equipment will examine signal smooth the justification operations, and reinsert the A1 and A2 bytes.

When the A1 and A2 bytes are removed from the SONET/SDH tributary signals at the transmitting end, their time position grouped together to form the OCh frame format. Because is it unlikely that the tributary SONET frames will be phase aligned, the relative time positions of the Tributary payload data structures will not be lined up. Therefore, it is necessary to provide a mechanism in the OCh transmitted framing structure which will inform the receiving end of the proper location in the output tributary data stream for re-insertion of SONET/SDH frame structure A1 and A2 bytes. This functionality is provided by the 16 ACxy bytes in the OCh frame. These bytes provide pointers which indicates the location of the SONET/SDH J0 byte which immediately follows the A2 bytes in the SONET/SDH signal.

In one embodiment, the Transmultiplexer be based on a 4:1 multiplexing ratio. This means that there would be four primary tributary ports for the multiplexer which would be byte multiplexed on a 4:1 ratio to form the optical line signal. It is further proposed that the 4:1 multiplex structure provide for the three levels of tributary signals. Each level will be related to the next higher level by a factor of 4. With this structure, it is possible to provide tributaries of different rates.

The OCh frame structure can consist of 6480 columns and 6 rows, which translates to data blocks of 6 groups of 6480 bytes in the transmission sequence. In each of the groups (rows) there are 16 bytes dedicated to the OCh frame structure and 6464 payload bytes. When a 4:1 multiplexing structure is used, there will be 1616 payload data bytes from each of the four Level 1 ports between the OCh framing byte groups. If a Level 1 port is subdivided into Level 2 ports, there would be 404 data bytes for each of the Level 2 ports between OCh control byte groups. When a Level 2 port is further subdivided into four Level 3 ports, each of the Level 3 ports will have 101 data byte appearances between OCh control byte groups.

Signal multiplexing will be accomplished by a byte interleaving process by level. Building of the structure in this way will allow the multiplexing process to be applied to various line rates with the same methodology. The 16 ACxy bytes will be divided into 4 groups of 4 bytes for use in synchronisation of the tributary signals and communication of the multiplexed level structure. At the OCh base rate of 2.488 Gb/s (OC-48), the frequency justification rate of each of the tributaries (OC-12) will be identical to that of SONET/SDH. This will ensure that effects such as jitter are well understood and under control in the network. The ACxy bytes will also communicate the tributary structure to the far end.

Synchronisation of the SONET/SDH tributary data to the DWDM line rate will utilise a similar pointer process that is used in multiplexing SONET/SDH signals. That is, a pointer processing positive-zero-negative byte justification system which provides frequency justification messages every 125 µs with justification occurring no more frequently than every 375 µs. The pointer will provide an address indicating the location of the J0 byte in the tributary SONET payload and will provide increment-decrement frequency justification commands as required.

It is important to recognise the differences in the SONET and OCh frame characteristics with respect to synchronisation. In SONET, the frame period is fixed in time. The frame is built on a basic STS configuration of 810 bytes, so that each integer increase in line rate results in the same integer increase in bytes multiplied by 810. However, the frame period remains the same - 125 µs. Each STS signal within the OC-N tine signal carries it's own synchronisation data (H1, H2 and H3 bytes). The SONET frame structure guarantees that the counters employed in STS synchronisation do not exceed the 10 bits provided in H1 and H2 bytes.

The OCh frame is fixed in byte-count size. It is based on the byte-count size of the OC-48 signal which contains 38,880 bytes. As the line rate increases, the number of OCh frames that occur within the SONET frame time limit of 125 µs, increases proportionately. At the OC-48 line rate, there is exactly 1 OCh frame in 125 µs. At OC-192, there are 4 OCh frames within the same time period, at OC-768 there are 16, and the number increases proportionately as the line rate increases. This characteristic requires some changes in the SONET synchronisation signalling structure for use in OCh. It is however, desirable to maintain most of the synchronisation signalling characteristics of SONET because of the experience and knowledge of jitter and other transmission characteristics gained.

As the line rate increases beyond OC-192, the number of bits needed in the ACxy bytes for pointer address can increase proportionately. The pointer address messages can be synchronised so that all of the Level 1 pointer messages are transmitted simultaneously; all of the Level 2 port messages are transmitted simultaneously, and all of the Level 3 pointer messages are transmitted simultaneously. However, this will result in a very large pointer address counter which will increase as the line rate and tributary rates increase. For example, at a line rate equal to OC-192, the synchronised pointer counter would require a capacity greater than 38, 880 bytes (16 bit counter) for the OC-48 tributary. If the line rate were increased again to OC-768 the pointer counter requirement becomes more than 155,136 bytes (18 bit counter). If the line rate increased again, the pointer counter capacity would again increase. This characteristic of the OCh frame dictates that some mechanism will have to be provided in the synchronisation message structure to limit the pointer counter capacity required.

This mechanism will be a Master Frame indicator which will indicate the presence of a Pointer message in the OCh frame. This Master Frame Indicator will allow the pointer message to "float" through the SONET frame period and will keep the required pointer address count size limited. With the Master Frame Indicator, the occurrences of the framing messages in the 4 Level ACxy groups can occur anywhere within a multiple OCh SONET frame independently and can be maintained within 1-2 OCh frame count of the beginning of the payload. Once the pointer location has been determined, the pointer location is determined by two things: the number of OCh frames between pointer messages and the AC2-AC3 pointer address count in the OCh frame.

When the multiplexing structure is broken into a Level 2 structure, there is the possibility of 4 additional tributaries on each of the 4 Level 1 primary pods. That means that each of the 4 ACxy groups has to provide 4 pointer messages within a 125 µs period to maintain SONET synchronisation characteristics. Since only one message per group is allowed in each OCh frame, a total of 4 OCh frames are required to send the pointer messages for all of the Level 2 tributaries in one group. This could mean that a counter address of 4 times the number of bytes in the OCh frame would be required. However, it is to be noted that the byte count for the Level 2 tributary rate will be ¼ that of the Level 1 port. The appearance in time of the pointer message for the level 2 port may be 3-4 OCh frames away because, only 1 message can be transmitted per OCh frame and all of the payload could be aligned within one OCh time period. This increases the counter limit by a factor of 4 so the counter limit will remain the same as for the Level 1 port. Similar reasoning applies to Level 3 ports.

It should be noted that the SONET synchronisation rules can only be achieved for Level 3 ports when the line rate is OC-192 or above; because the pointer messages do not occur frequently enough to ensure a pointer message opportunity of at least once in each 125 µs time period for these OC-3 Level 3 signals.

In OCh Pointer Processing, one (ACx1) byte is used for multiplex control, two bytes (ACx2, ACx3) are used to point to the start (address) of the tributary path data stream, and a third byte (ACx4) is used to provide space for stuffing data bytes for negative stuff synchronisation adjustment. In each OCh frame there are four ACx1; 4 ACx2, four ACx3 and four ACx4 bytes. Each group of four ACxy bytes will be used for frequency justification of one of the four basic ports to the Transmultiplexer and to communicate the multiplexed structure of the data to the far end. ACay (y=1, 2, 3, 4) will be used for justification of the tributary on Tributary Port A.

The ACx1 bytes first provide a Master Frame indicator which indicates:
- (1): the presence of a pointer action message;
- (2): the address and level of the tributary port (A, B, C, D) which is affected at Level 2 or Level 3 if the Level 1 port is expanded to these levels. This tells the far end of the depth of the multiplex expansion.
- (3): A new data flag like that in SONET which indicates the presence of a completely new pointer count. (When the flag is not present, an increment - decrement operation like that of SONET will be used).

The ACxy message will be inserted in the OCh frame in which the pointer address count to the start of the tributary payload is less than the 38,880 byte OCh frame limit as determined by the Level of the tributary. Thus for a Level 1 port, the message could occur one OCh frame previous to the payload start occurrence. For a Level 2 port, the message could occur four OCh frames previous; and for a Level 3 port, the message could occur sixteen frames earlier. The Master frame indicator will indicate the presence of a pointer control message; and the Level 2/Level 3 address will indicate the tributary type.

The two bytes in AC2-AC3 provide the address (tributary rate byte count) for the location of the start of the tributary data path. As in SONET, it is proposed that an increment/decrement structure and New Data Flag (ACx1 bit 8) be used for pointer adjustments. The OCh frame size is 38,880 bytes (38,784 payload), and there are four tributary ports. A set of ACxy bytes will be provided for each of the tributary ports. As in SONET only the payload bytes are counted.

Sixteen bits will be required for the address count (2^16 = 65,536) in the AC2 and AC3 bytes. The last bit of the AC1 byte will be used to indicate a "new data flag" as in SONET. It is proposed that a "1" = "new data Flag". "0" will indicate increment/decrement adjustments. The 16 bits are necessary to cover the complete count of an OCh frame and because the Level 2 and Level 3 tributaries have to share the ACxy stuffing group assigned to their parent Level 1 port. That means that the stuffing messages for these ports will have to maintain a pointer count that is several OCh frames wide while it is waiting for its turn to send the pointer message.

The 16 bit address count of the AC2, AC3 bytes will begin on the first applicable data byte (i.e. data byte for the tributary involved) following the AC3 bytes in the OCh frame. Each tributary port will have its own counter and will only count the number of occurrences of it's data bytes in the OCh data stream and show the relationship of the pointer address to the payload.

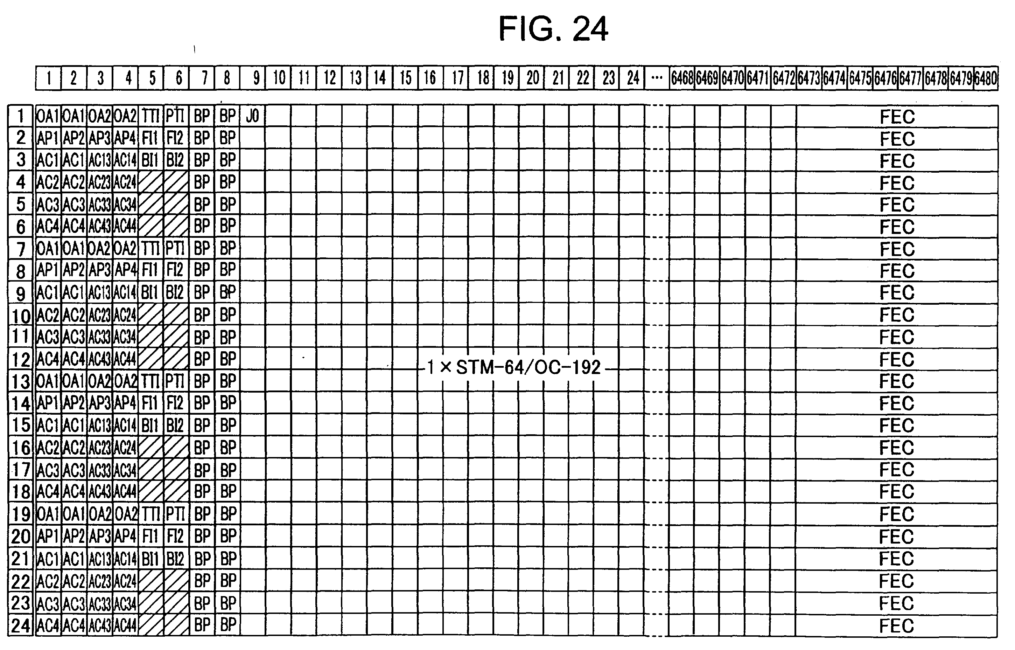

The sixteen bits proposed for the OCh pointer counter size will not be sufficient at OCh line rates above OC-48. Therefore, it is proposed that the location of the pointer action message move as necessary from OCh frame to OCh frame within the 125 µs SONET frame period to stay within the counter range. FIG. 24 shows that there are four OCh frames within an OC-192 SONET frame. This allows for four possible positions of the pointer message within the SONET time frame. With this proposal, it is proposed that when the Pointer Counter exceeds the 38,784 count limit of one OCh frame, a new data flag indication will be transmitted and the pointer message will be transferred to the next OCh frame. If this is done, the sixteen bit pointer address will be sufficient.

The AC4 byte is used for the pointer's negative stuff opportunity for each of the four groups. The positive stuffing opportunity will occur on the first appearance of a data byte for the applicable tributary in the multiplexed data structure following the AC4 byte positions in the OCh frame.

It is proposed that the general Stuffing rules derived for SONET/SDH be modified to accommodate the ACxy byte format and applied to the OCh frame with SONET/SDH tributaries, i.e.,
- (1): When there are frequency offsets between the line signal and the tributary signal, the pointer address value shall be incremented or decremented as needed, accompanied by a corresponding positive or negative stuff byte;
- (2): A pointer increment operation shall be indicated by inverting the odd number bits in the AC2 and AC3 bytes;
- (3): A pointer decrement operation shall be indicated by inverting the even numbered bits in the AC2 and AC3 bytes;
- (4): The increment-decrement decision should be made at the receiver by a match of 14 of 16 I- or D-bits to either increment or decrement the pointer;
- (5): If the 14 of 16 objective is not met then the increment decision shall be made by a majority vote of the I-bits and the decrement decision by a majority vote of the D-bits;
- (6): A normal New Data Flag for the ACx1 bits 2-7 addressed tributary shall be indicated (during normal operation) by a ^{"}0" in the last bit of the ACx1 byte. The NDF shall be set by sending a "1" in the bit #8 of the ACx1 byte; and (7) The pointer rules for pointer interpretation stated in GR-253 Iss 2, Dec 1995, Rev 2, Jan 1999 requirements R3-100 [96v2] and R3-102 [97] shall preferably apply as amended to substitute the OCh payload for STS SPE and recognition of the differences in NDF structures and pointer address sizes.

Using the general rules of SONET/SDH will ensure that jitter and wander are no worse than that experienced with SONET/SDH transmission

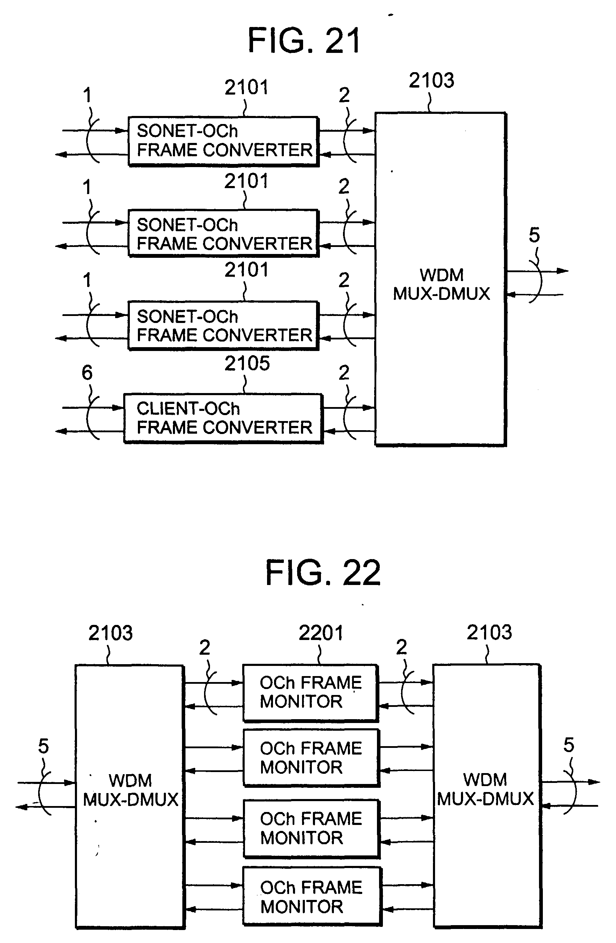

A sixth embodiment is shown in FIG. 21. In this embodiment, signals 1 and 2 are as in the first embodiment, and the SONET-OCh frame converter 2101 is the apparatus of the first embodiment in its entirety, including converter 200 of FIG. 2 and converter 500 of FIG. 5. Also included is a WDM MUX-DMUX 2103, to which is connected several signal 2 outputs from multiple SONET-OCh frame converters 2101, where each signal 2 has a unique optical wavelength. Signal 5 is an optical multi-wavelength signal that includes all of signal 2 wavelengths. Finally, a CLIENT-OCh frame converter 2105 is included. Signal 6 is a digital signal of a format other than SONET or SDH.

In this embodiment, the wavelength division multiplexer-demultiplexer 2103 combines each of signals 2 into a single aggregate multi-wavelength signal transmined on one optical fibre. In the reverse direction the multiplexer-demultiplexer 2103 separates each of the unique wavelengths to the single wavelength optical digital signals 2, where the wavelength distributed to each SONET-OCh frame converter 2101 is the same nominal wavelength as the signal at the output signal 2 of that SONET-OCh frame converter 2101. The CLIENT-OCh frame converter 2105 maps the signal 6 into an OCh frame without deleting any bytes and inserts OCh overhead to produce a signal 2 with a higher transmission rate than signal 6. In the reverse direction, the CLIENT-OCh frame converter 2105 synchronises to the OCh frame, terminates the OCh overhead, and then extracts the entirety of signal 6 from the OCh frame, restoring it to its original transmission rate.

A seventh embodiment, shown in FIG. 22, includes two wavelength division multiplexer-demultiplexers 2103 as described in the sixth embodiment, and multiple OCh frame monitors 2201, each of which consist of the entirety of the apparatus described in the fourth embodiment. Signals 2 and 5 are as described in the sixth embodiment. The operation of the wavelength division multiplexer-demultiplexers 2103 and OCh frame monitors 2201 are as described in the sixth and fourth embodiments, respectively. The monitoring can detect errors from the error correction code and parity checks.

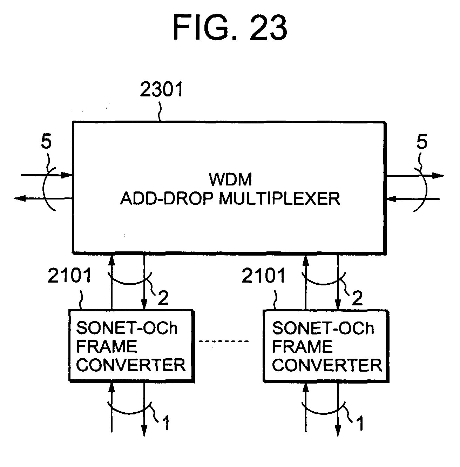

The eighth embodiment, shown in FIG. 23, includes the SONET-OCh frame converter 2101 of a structure and operation as described in the first and sixth embodiments, and a wavelength division add-drop multiplexer 2301. Signals 5, 2, and 1 are as described in previous embodiments. The wavelength division add-drop multiplexer 2301 extracts some number of the wavelengths from the multi-wavelength signal 5, and distributes each as a single wavelength signal 2 to one of multiple SONET-OCh frame converters 2101. Other wavelengths in the incoming signal 5 not extracted are passed to signal 5 at the opposite side. In the reverse direction, the wavelength division add-drop multiplexer 2301 receives multiple single wavelength signals 2 from SONET-OCh frame converters 2101, and inserts them into one or both of the outgoing multi-wavelength signals 5.

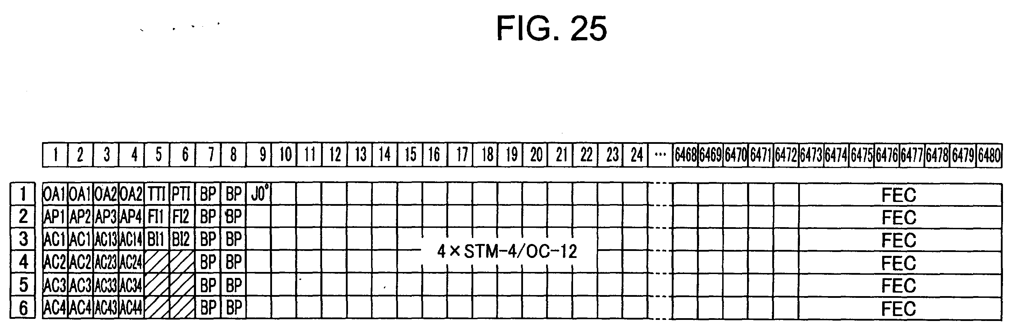

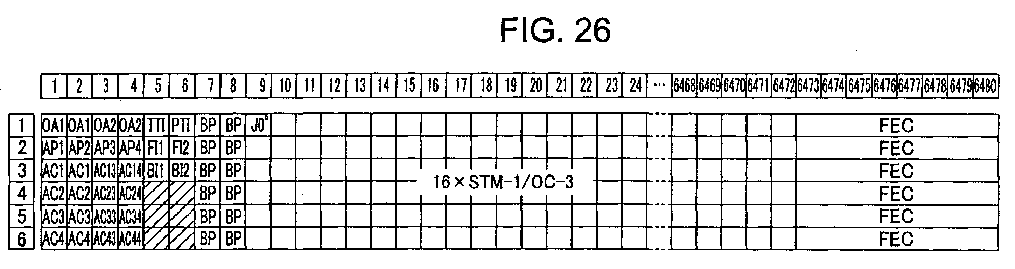

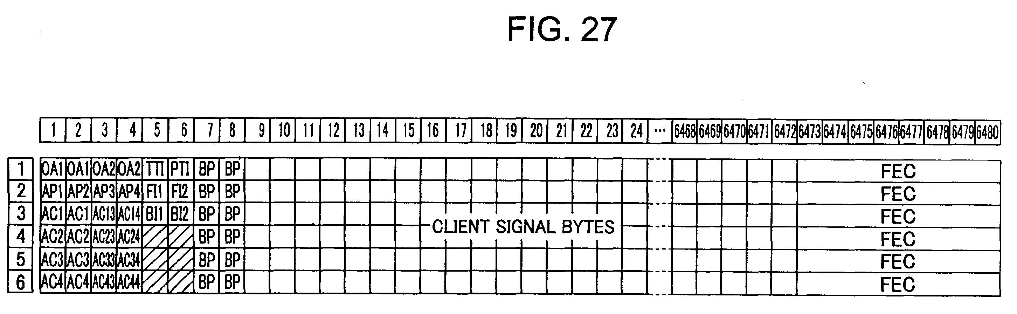

The OCh format of FIG. 4 referenced in the first embodiment is shown for the cases where signal 1 is of an OC-192/STM-64 rate (FIG. 24), an OC-12/STM-4 rate (FIG. 25), OC-3/STM-1 rate (FIG. 26), or a non-SONET/non-SDH signal (FIG. 27).. FIG. 4 illustrates a possible OCh frame structure that has six rows, 8 columns of overhead bytes and 8 columns of FEC. FIG. 24 illustrates use of the six row OCh frame structure of FIG. 4, in a multi-frame configuration, to map an OC-192 or an STM-64 signal in one exemplary embodiment. FIG. 25 illustrates use of the six row OCh frame structure of FIG. 4 to map an OC-12 or an STM-4 signal. FIG. 26 illustrates use of the six row OCh frame structure of FIG. 4 to map an OC-3 or an STM-1 signal. FIG. 27 illustrates use of the six row OCh frame structure of FIG. 15 to map a signal other than SONET or an SDH.

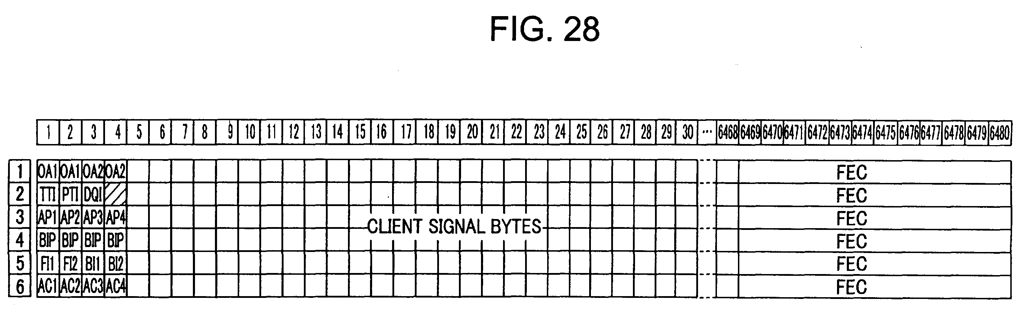

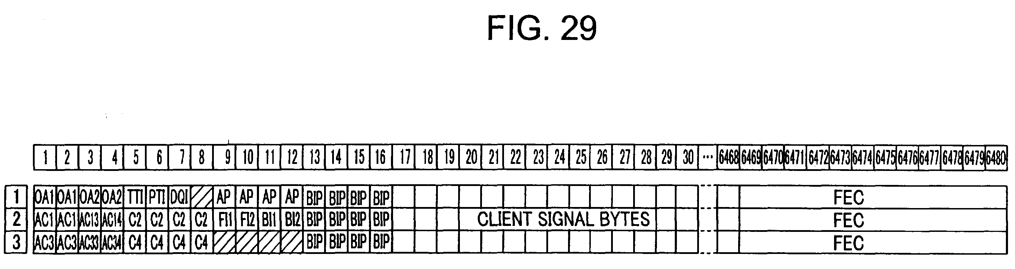

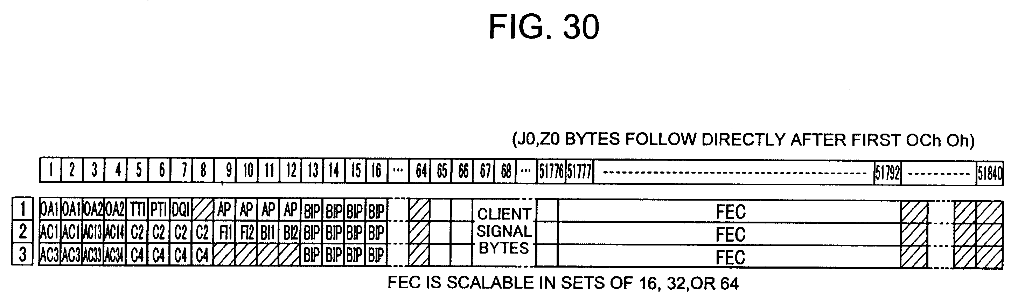

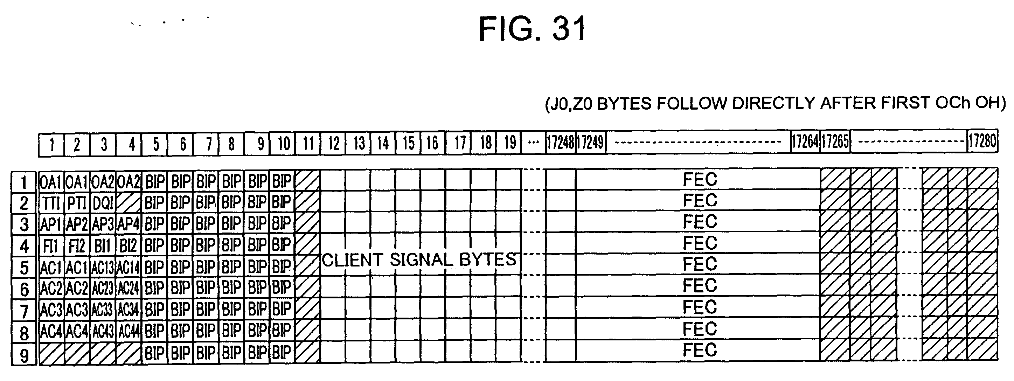

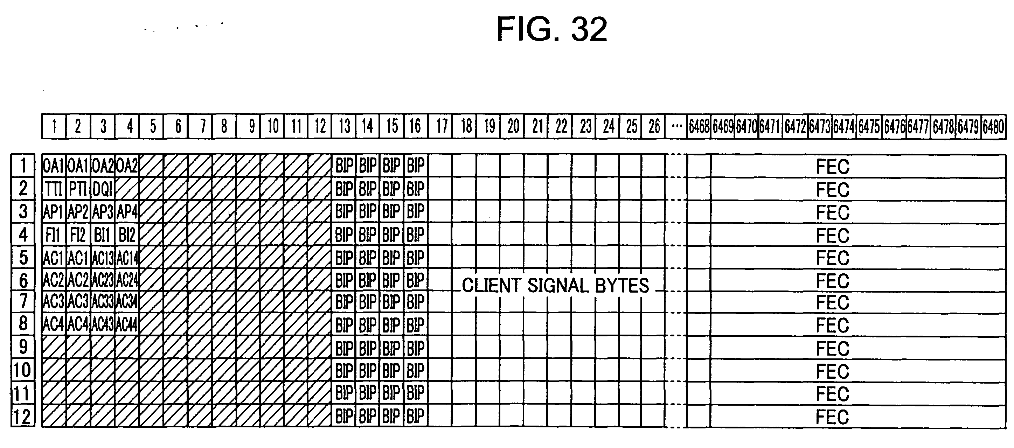

Using amounts of bytes based on the total number of A1 and A2 bytes in an OC-48/STM-16 or OC-192/STM-64 frame, various other OCh formats are also possible, and could be implemented as the OCh format in each of the embodiments described as alternatives to the format shown in FIG. 4. Some possible alternative formats are shown in FIGs. 28, 29, 30, 31 and 32. FIG. 28 illustrates another possible six row OCh frame structure, the OCh frame structure including four columns of overhead bytes and twelve columns of FEC bytes. FIG. 29 illustrates a three row OCh frame structure with sixteen columns of overhead bytes and sixteen columns of FEC bytes. FIG. 30 illustrates a three row OCh frame structure including sixty-four columns of overhead bytes and up to 64 columns for FEC bytes. FIG. 31 illustrates a nine row OCh frame structure including eleven columns of overhead bytes and up to 32 columns for FEC bytes. FIG. 32 illustrates a twelve row OCh frame structure including sixteen columns of overhead bytes and sixteen columns for FEC bytes.

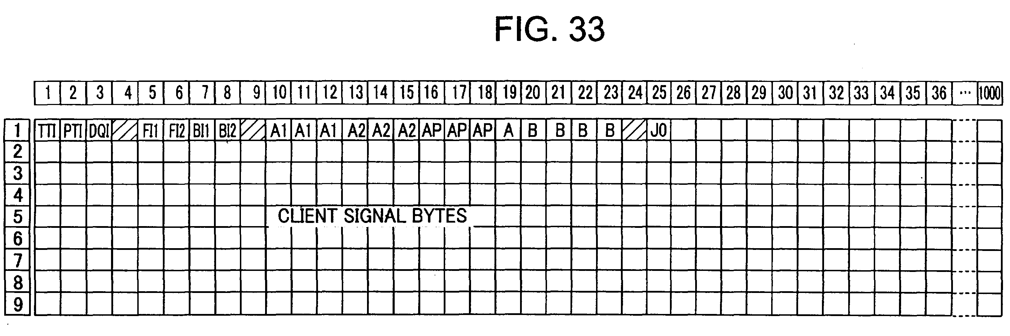

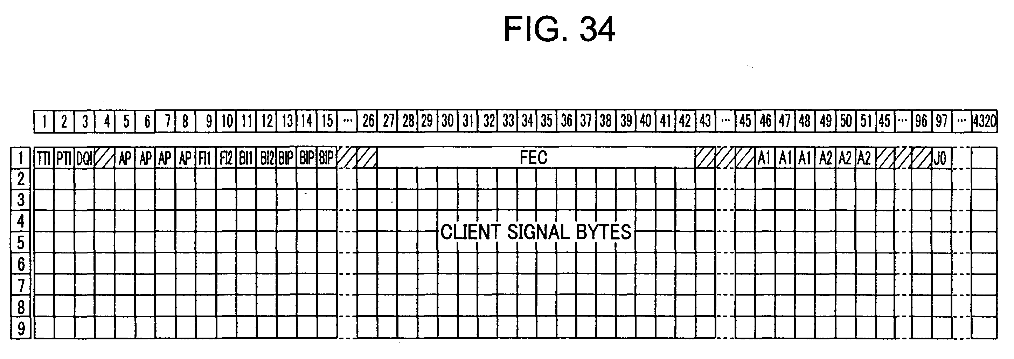

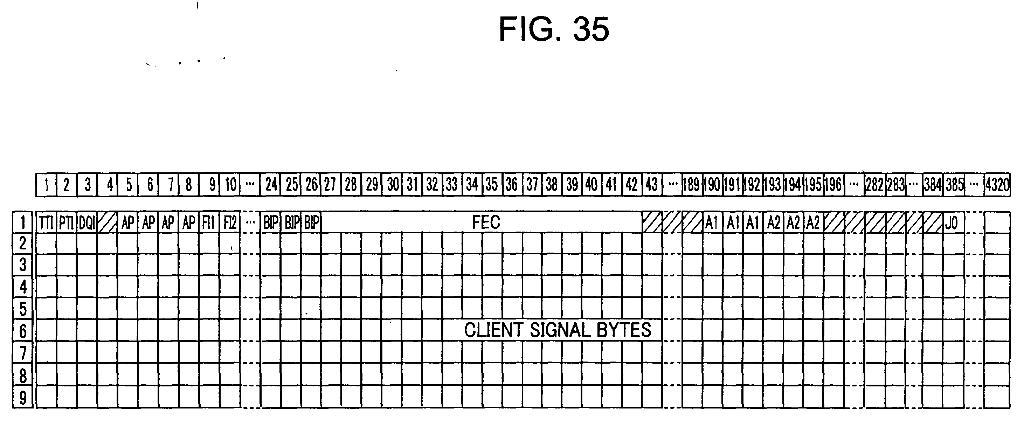

Other formats, in which the basic row and column structure of a SONET/SDH frame is left unchanged, a portion of the A1 and A2 framing pattern left intact for framing, and the rest of the A1 and A2 bytes used for OCh overhead and FEC bytes are also possible. Some examples are shown in FIGs. 33, 34 and 35. FIG. 33 illustrates an OCh format in which three of the A1 bytes and three of the A2 bytes of an OC-12 or an STM-4 rate signal are left intact and the other A1 and A2 bytes replaced with OCh overhead. FIG. 34 illustrates an OCh format in which three of the A1 bytes and three of the A2 bytes of an OC-48 or an STM-16 rate signal are left intact and the other A1 and A2 bytes are replaced with OCh overhead and FEC bytes. FIG. 35 illustrates an OCh format in which three of the A1 bytes and three of the A2 bytes of an OC-192 or an STM-64 rate signal are left intact and the other A1 and A2 bytes are replaced with OCh overhead and FEC bytes.

The assignment of overhead usage, including FEC in each of the OCh formats are only examples and these bytes could be alternatively assigned, including other functions or the elimination of FEC or any of the other usages shown.

While the present invention has been described with reference to the particular illustrative embodiments, it is not restricted to those embodiments. It is to be appreciated that those skilled in the art can change or modify the embodiments without departing from the scope and spirit of the invention.

## Claims

1. A digital transmission frame converting apparatus comprising:
a first digital signal receiver which receives a first digital signal with a first frame format including first frame synchronisation bits;
a first frame synchronisation module which finds a location of said first frame synchronisation bits in said received first digital signal;
a first mapping module which maps at least a portion of said received first digital signal's data other than said first frame synchronisation bits into a payload of a second digital signal with a second frame format, said second frame format comprising said payload and additional overhead bytes; and
an overhead insertion module which generates said second digital signal by inserting overhead information into said overhead bytes in said second frame format, wherein said overhead information's size is at least as small as said first frame synchronisation bits' size.

2. The apparatus of claim 1, further comprising:
a clock generating module; and
a stuff control module to synchronise said received first digital signal to a clock signal from said clock generating circuit.

3. The apparatus of claim 2, wherein at least one additional digital signal is received and synchronised by said apparatus.

4. The apparatus of claim 2, wherein said first frame format is a SONET frame format or an SDH frame format.

5. The apparatus of claim 2, wherein said received digital signals are multiplexed together.

6. The apparatus of claim 1, further including a scrambler module for scrambling said second digital signal.

7. A digital transmission frame converting apparatus comprising:
a first optical-electrical converter which receives a first digital signal with a first frame format wherein said first digital signal comprises a payload and overhead bytes and wherein said overhead bytes comprise at least first frame synchronisation bits and parity check bits;
a first frame synchronisation module which finds a location of said first frame synchronisation bits in said first digital signal;
an overhead termination module which processes said overhead information in said overhead bytes in said received first digital signal; and
a frame regeneration module which creates a second digital signal with a second frame format by removing said overhead bytes from said received first digital signal and adding second frame synchronisation bits wherein said second frame synchronisation bits replace said overhead bytes.

8. The apparatus of claim 1 or 7, wherein at least one of said modules is implemented as a circuit or in software.

9. The apparatus of claim 7, wherein said second frame format is SONET frame format defined in ANSI T1.105 and said second frame synchronisation bits comprise A1 and A2 bytes defined in ANSI T1.105.

10. The apparatus of claim 7, wherein said second frame format is SDH frame format defined in ITU-T G.707 and said second frame synchronisation bits comprise A1 and A2 bytes defined in ITU-T G.707.

11. The apparatus of claim 7, further comprising
a demultiplexing module which demultiplexes said second digital signal into third digital signals without frame synchronisation bits; and
a plurality of tributary transmitting modules, each of which comprises a destuff control module which regenerates said third digital signal's signal rate with bits for frame synchronisation by destuffing, wherein the rate of said overhead bytes over said payload in said third signal is the same as the rate of said second synchronisation bits over said second digital signal.

12. The apparatus of claim 11, wherein said second frame format is a SONET frame format or an SDH frame format.

13. The apparatus of claim 11, wherein said overhead information comprises multi-frame indication bytes.

14. The apparatus of claim 11, wherein the nominal signal rate of said second digital signal at one frame tributary transmitting module is different from that at another tributary transmitting module.

15. A digital signal monitoring apparatus comprising:
a receiver which receives a first digital signal with a first frame format which comprises a payload and overhead bytes wherein said overhead bytes comprise at least first frame synchronisation bits and parity check bits and wherein the size of said overhead bytes in relation to said payload is equal to the size of A1 and A2 bytes of SONET frame format defined in ANSI T1.105 to said payload;
a first frame synchronisation module which finds a location of said first frame synchronisation bits in said first digital signal;
an overhead monitor module which monitors overhead information in said overhead bytes in said received first digital signal; and
a transmitter which transmits said first digital signal into an optical fibre after it has been monitored.

16. The apparatus of claim 7 or 15, further comprising a descrambler for descrambling said first digital signal.

17. A method of converting digital information comprising the steps of:
receiving a first signal including a repeating fixed pattern of bits;
generating a second signal from the first signal by replacing the repeating fixed pattern of bits in the first signal with channel overhead bits; and
transmitting the second signal.

18. The method of claim 17, further comprising the steps of:
receiving the second signal;
extracting channel overhead bits from the second signal; and
generating a third signal from the second signal by inserting said fixed pattern of bits in place of the extracted channel overhead bits.

19. The method of claim 17, further comprising the step of using the extracted channel overhead bits to perform a transmission system management function.

20. The method of claim 17, wherein the fixed pattern of bits is a frame pattern signal.

21. The method of claim 17, wherein the step of transmitting the second signal includes the step of using an optical channel to transmit the second signal.

22. A method for converting a digital transmission frame, comprising the steps of:
receiving a first digital signal with a first frame format including first frame synchronisation bits;
finding a location of said first frame synchronisation bits in said received first digital signal;
mapping at least a portion of said received first digital signal's data other than said first frame synchronisation bits into a payload of a second digital signal with a second frame format, said second frame format comprising said payload and additional overhead bytes; and
creating said second digital signal by inserting overhead information into said overhead bytes in said second frame format, wherein said overhead information's size is at least as small as said first frame synchronisation bits' size.

23. The invention of claim 1 or 22, wherein said first frame format is the SONET frame format defined in ANSI T1.105 and said first frame synchronisation bits comprise A1 and A2 bytes defined in ANSI T1.105.

24. The invention of claim 1 or 22, wherein said first frame format is the SDH frame format defined in ITU-T G.707, and said first frame synchronisation bits comprise A1 and A2 bytes defined in ITU-T G.707.

25. A digital transmission frame converting method comprising the steps of:
receiving a first digital signal with a first frame format wherein said first digital signal comprises a payload and overhead bytes and wherein said overhead bytes comprises at least first frame synchronisation bits and parity check bits;
finding a location of said first frame synchronisation bits in said first digital signal;
processing said overhead information in said overhead bytes in said received first digital signal; and
generating a second digital signal by removing said overhead bytes from said received first digital signal and adding second frame synchronisation bits wherein said second frame synchronisation bits replace said overhead bytes.

26. The method of claim 25, wherein said second frame format is SONET frame format defined in ANSI T1.105 and said first frame synchronisation bits comprise A1 and A2 bytes defined in ANSI T1.105.

27. The method of claim 25, wherein said second frame format is SDH frame format defined in ITU-T G.707 and said first frame synchronisation bits comprise A1 and A2 bytes defined in ITU-T G.707.

28. The invention of any one of claims 1, 7, 15, 22 and 25, wherein said overhead information comprises at least one of the following:
alarm reporting bits.
parity check result reporting bits,
first and second forward quality indication bits,
forward error correction bits.
least second frame synchronisation bits which have a different bit pattern from said first frame synchronisation bits.

29. The invention of any one of claims 1, 7, 22 and 25, wherein said second signal's transmission rate is equal to said first signal's transmission rate.

30. The method of claim 25, further comprising the steps of;
demultiplexing said second digital signal into said third digital signals without frame synchronisation bits; and
regenerating the signal rate of said third digital signals with bits for frame synchronisation by destuffing.

31. The invention of any one of claims 1, 7 and 25, wherein said overhead information comprises pointer bytes showing where the frame of said second digital signal without synchronisation bytes is started.

32. A digital transmission frame converting apparatus comprising:
a first digital signal receiver which receives a first digital signal;
a first mapping module which maps at least a portion of said received first digital signal's data into a payload of a second digital signal with a second frame format, said second frame format comprising said payload and additional overhead bytes; and
an overhead insertion module which creates said second digital signal by adding a scramble pattern to said payload and by inserting overhead information into said overhead bytes in said second frame format.

33. The apparatus of claim 1 or 32, further including a first electrical-optical converter to convert said second digital signal into an optical signal, preferably a WDM optical signal.

34. A digital transmission frame converting apparatus comprising:
a first digital signal receiver which receives a first digital signal;
a first mapping module which maps at least a portion of said received first digital signal's data into a payload of a second digital signal with a second frame format, said second frame format comprising said payload and additional overhead bytes; and
an overhead insertion module which generates said second digital signal by inserting overhead information into said overhead bytes in said second frame format, wherein said overhead information includes parity check bits, first forward quality indication bits and a second forward quality indication bits.

35. A digital signal regenerating apparatus comprising:
a receiver which receives a first digital signal with a first frame format which comprises a payload and overhead bytes wherein said overhead bytes comprise at least one parity check bit, At least one first forward quality indication bit and at least one second forward quality indication bit;
a parity check module which detects the number of parity errors;
a section quality detection module which detects the number of errors by subtracting a number in said at least one first forward quality indication bit from said number of parity errors;
a sub-network quality detection module which detects the number of errors by subtracting a number in said at least one second forward quality indication bit from said number of parity errors;
a section quality indication inserter which inserts the number of parity errors into the first forward quality indication bits; and a sub-network forward quality indication inserter which inserts the number of parity errors into the second forward quality indication bits when the apparatus is provisioned as a sub-network termination element.

36. A digital transmission frame converting apparatus comprising:
a plurality of first digital signal receivers which receive first digital signals;
a first mapping module which maps at least a portion of said received first digital signal's data into a payload of a second digital signal with a second frame format, said second frame format comprising said payload and additional overhead bytes;
a clock generating module;
a stuff control module which synchronises said received first digital signal to a clock signal from said clock generating circuit; and
an overhead insertion module which generates said second digital signal by inserting overhead information into said overhead bytes in said second frame format, wherein said overhead bytes include at least one stuffing control byte and at least one port indicator byte to indicate a tributary port to which said stuffing control bytes belong to.
